Europäisches Patentamt

European Patent Office

Office européen des brevets

(19)

(11) **EP 1 028 393 A1**

(12) **DEMANDE DE BREVET EUROPEEN**

(43) Date de publication:
**16.08.2000 Bulletin 2000/33**

(51) Int Cl.⁷: **G06T 15/70**

(21) Numéro de dépôt: **99400341.6**

(22) Date de dépôt: **12.02.1999**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **Duran**
**92130 Issy Les Moulineaux (FR)**

(72) Inventeurs:
• **Villard, André**
  **75014 Paris (FR)**
• **Lange, Hervé**
  **75020 Paris (FR)**

(74) Mandataire: **Moutard, Pascal Jean et al**
**Cabinet Beau de Loménie**
**158, rue de l'Université**
**F-75340 Paris Cedex 07 (FR)**

(54) **Procédé et dispositif d'animation d'images bidimensionnelles et tridimensionnelles**

(57)    L'invention concerne un procédé de génération d'une forme animée ou un procédé d'animation d'images, comportant l'attribution, à chaque point géométrique de la forme ou de l'image, d'un vecteur champ, et la détermination du mouvement de chaque point selon une équation du mouvement, en fonction du champ en ce point. Les points sont déplacés selon le mouvement ainsi déterminé.

L'image peut comporter des points à atteindre ($P_B$) et des points obstacles ($P_O$), le champ comportant alors une composante attractive, associée aux points à atteindre, et une composante répulsive, associée aux obstacles.

FIG.4

# EP 1 028 393 A1

**Description**

## Domaine technique ; art antérieur

L'invention concerne, d'une manière générale, la génération de formes animées, bidimensionnelles ou tridimensionnelles.

Si l'on sait actuellement générer des formes, en particulier tridimensionnelles, leur animation en temps réel représente toujours un problème technique qui n'est pas résolu.

Or, divers domaines d'activité, tels que ceux des jeux vidéo ou de la réalisation cinématographique, ont besoin d'outils permettant simultanément de générer des formes, notamment en trois dimensions, mais aussi de les animer et/ou de les modifier, et ceci en temps réel.

Actuellement, il existe un gros décalage entre la demande pouvant s'exprimer dans ces domaines, et les solutions apportées.

De plus, des approches "temps réel" existent actuellement, mais elles nécessitent la mise en oeuvre de gros ordinateurs.

Les procédés connus, dans ce domaine, consistent d'abord à générer des formes tridimensionnelles, de manière classique, puis à "ajouter" le mouvement, de la même manière que l'on crée un dessin animé. Ces procédés connus présentent de faibles capacités d'animation. Or, dans un domaine comme celui du jeu vidéo, les capacités d'animation et la prise en compte du mouvement sont essentielles, beaucoup plus que le réalisme de la forme inanimée elle-même. De même, dans le domaine de la conception assistée par ordinateur de pièces techniques, il est important de pouvoir non seulement représenter lesdites pièces mais, aussi, de pouvoir observer leur comportement lors de déformations simulées.

Le document EP-425 177 décrit un procédé pour représenter des objets tridimensionnels à l'aide de surfaces NURBS. Ces surfaces sont déterminées à partir de points de contrôle et de poids associés à ces points de contrôle.

Le document US-5 796 400 décrit un procédé mettant en oeuvre, pour un objet, une grille de points de contrôle.

Aucun des procédés décrits dans ces documents n'est compatible avec une utilisation en temps réel.

Selon un autre aspect, se pose actuellement le problème de disposer de modèles, en particulier tridimensionnels, dont les données puissent être envoyées par le réseau Internet, en incluant des données sur l'animation de ces modèles.

Internet met en oeuvre, en particulier, l'utilisation de liaisons téléphoniques dont le débit est faible. Un tel véhicule de l'information ne peut donc transmettre des données décrivant des formes, en particulier des formes en mouvement, qui sont définies, de manière classique, par un nombre important de points. Il se pose donc le problème de générer des objets tridimensionnels suffisamment optimisés pour permettre le transfert et le contrôle des informations via Internet, y compris les informations portant sur le mouvement de l'objet concerné.

Un des autres problèmes techniques qui se pose est, indépendamment du problème de transmission via Internet, le problème du stockage des objets sous forme de données efficaces et très légères, en temps réel, et peu coûteuses en mémoire.

## Exposé de l'invention

L'invention a tout d'abord pour objet un procédé de génération d'une forme animée, ou d'animation d'une forme, bidimensionnelle ou tridimensionnelle, comportant les étapes suivantes :

- déterminer des points géométriques définissant la forme dans l'espace
- attribuer à chaque point géométrique, ou à une partie des points ainsi déterminés, un vecteur champ
- déterminer, ou calculer, le mouvement de chaque point, ou d'une partie des points, selon une équation du mouvement, en fonction du champ en ce même point
- déplacer les points de la forme selon le mouvement ainsi déterminé.

Les points de la forme sont affichés sur un écran de visualisation et déplacés selon le mouvement déterminé.

Ce procédé d'animation ou de traitement d'images bidimensionnelles ou tridimensionnelles intègre, dans la description d'un objet à animer, les paramètres dynamiques, puisqu'un vecteur champ est attribué à tout ou partie des points géométriques, pour en déterminer le mouvement.

Le champ est une fonction vectorielle $\vec{E}$ (x, y, z) définie en tout point de la forme. Il peut éventuellement dériver d'un potentiel.

Selon un mode de réalisation, le champ en un point est fonction du déplacement d'un, ou de plusieurs, autre(s) point(s) de la forme. Il s'agit par exemple des points qui sont les plus proches voisins du point considéré, le champ étant alors par exemple une combinaison linéaire des déplacements des plus proches voisins et du point considéré.

2

Ainsi, le procédé selon l'invention permet d'intégrer, dans les coordonnées de chaque point, ou de plusieurs points, l'influence d'autres points de la forme elle-même : un déplacement de ces autres points entraîne une modification du champ au point considéré, et donc une modification du mouvement du point.

La détermination du mouvement de chaque point peut consister en un calcul de la vitesse de déplacement du point, en fonction du champ en ce point.

Ainsi, l'équation du mouvement peut relier la vitesse du point proportionnellement au champ en ce même point.

Elle peut aussi prendre en compte les effets dus à l'amortissement et à l'inertie, auquel cas, la vitesse de déplacement de chaque point est obtenue par la formule :

$$V_{n+1} = k_a \, V_n + k_i \, E_n$$

où

\* $V_{n+1}$ et $V_n$ représentent respectivement la vitesse aux instants n et n+1

\* $E_n$ représente la valeur du champ au point considéré à l'instant n

\* $k_a$ et $k_i$ sont des coefficients, respectivement d'amortissement et d'inertie.

Par conséquent selon l'invention, on applique au domaine de l'imagerie, 2D ou 3D, les lois physiques qui décrivent le mouvement d'une particule dans un ou plusieurs champs de potentiel, et on modifie les équations physiques classiques (voir définitions données ci-dessus du mode de calcul de la vitesse) de manière à rendre le procédé compatible avec une animation en temps réel. Les champs peuvent être attracteurs ou répulseurs et conditionnent donc, un peu à la manière d'un aimant, le mouvement propre de tout point subissant l'influence de ces champs.

Par ailleurs, le procédé selon l'invention permet de manipuler pratiquement, en 2D ou 3D, des notions physiques réalistes: il suffit pour cela de choisir le champ de manière adaptée.

Enfin, à tout instant, le procédé selon l'invention permet une modification immédiate des coordonnées dynamiques que constituent $k_a$ et/ou $k_i$ (coefficients d'amortissement et d'inertie). Il permet donc une forte interactivité.

Selon l'invention, la description du mouvement est donc contenue dans la définition de ces coordonnées supplémentaires, dites coordonnées dynamiques. La description du mouvement est donc économique en termes de place mémoire dans un dispositif de calcul à l'aide duquel le procédé selon l'invention est mis en oeuvre.

L'invention a également pour objet un procédé de génération d'une forme animée, comportant les étapes suivantes :

- déterminer des points géométriques définissant la forme dans l'espace
- déterminer ou calculer le mouvement de chaque point, ou d'une partie des points géométriques, en fonction du déplacement d'au moins un autre point de la forme
- déplacer les points de la forme selon le mouvement ainsi déterminé.

Ainsi, là encore, le mouvement est déterminé de l'intérieur même de la forme. Ce procédé d'animation ou de traitement d'images 2D ou 3D permet d'intégrer, pour tout point ou pour une partie des points, l'influence d'autres points de la forme elle-même : un déplacement de ces autres points entraînant une modification du mouvement du point considéré.

Le déplacement du point considéré peut être par exemple déterminé en fonction du déplacement des points qui sont les plus proches voisins dudit point.

L'invention a également pour objet un procédé de déplacement d'un point objet d'une image à animer vers un point but (PB) de l'image, ladite image comportant en outre, éventuellement, des points obstacles, ce procédé comportant les étapes suivantes :

- la définition d'une fonction de champ, dite champ d'image, comportant :

  \* une composante attractive associée au point but et s'annulant en ce point
  \* et, si des points obstacles sont présents, une composante répulsive associée à chacun des points obstacles

- le calcul de la vitesse de déplacement du point objet, proportionnellement à la valeur du champ d'image en ce point objet
- le déplacement du point objet en fonction de la vitesse de déplacement calculée

La vitesse de déplacement peut par exemple être calculée selon la formule :

$$V = (\delta/\|E\|) \cdot E$$

où V et E désignent respectivement les vecteurs vitesse et champ au point considéré.

C'est le cas si on considère des paramètres dynamiques $k_a$ et $k_i$, pour lesquels $k_a = 0$, et que l'on souhaite que la norme de la vitesse soit constante et égale à $\delta$.

Dans le cas de N obstacles $P_{oj}$ (j = 1,..., N), la vitesse de déplacement peut être calculée, selon les formules:

$$(dx/dt) = N.\{-k.(x - x_B) + \sum_{(j=1,N)} [k'_j. (x - x_{oj}) \|PP_{oj}\|^{-2}]\}$$
$$(dy/dt) = N.\{-k.(y - y_B) + \sum_{(j=1,N)} [k'_j. (y - y_{oj}) \|PP_{oj}\|^{-2}]\} \qquad (8)$$
$$(dz/dt) = N.\{-k.(z - z_B) + \sum_{(j=1,N)} [k'_j- (z - z_{oj}). \|PP_{oj}\|^{-2}]\}$$

avec $N = (\delta/\|(E_B + \sum_{(j=1,N)} (E_{oj}))\|)$

où $E_{oj}$ est le champ associé à l'obstacle $P_{oj}$.

k est un coefficient caractéristique de la composante attractive et $k'_j$(j = 1, ..., N) un coefficient caractéristique de la composante répulsive associée au point obstacle $P_{oj}$.

Selon un autre mode de réalisation on peut donner au point objet (ou animate) une inertie variable ou, par exemple, une inertie constante, « loin » d'un but à atteindre, et une inertie décroissante au fur et à mesure que ce but est approché. Ceci a un effet de « lissage» de la trajectoire lors de l'évitement d'obstacles (le point objet est entraîné par son inertie), et interdit un éventuel mouvement oscillatoire indéfini autour d'un but puisque l'inertie décroît jusqu'à devenir nulle une fois le but atteint (ce qui a le même effet qu'un « frottement » progressif).

A cette fin l'invention a donc également pour objet un procédé de déplacement d'un point objet d'une image à animer vers un point but (PB) de l'image, ladite image comportant en outre, éventuellement, des points obstacles, ce procédé comportant les étapes suivantes :

-   la définition d'une fonction de champ, dite champ d'image, comportant :

    *   une composante attractive associée au point but et s'annulant en ce point
    *   et, si des points obstacles sont présents, une composante répulsive associée à chacun des points obstacles

-   le calcul de la vitesse de déplacement du point objet, selon la formule

$$V_{n+1} = k_a. V_n + k_i E_n,$$

        où :

    *   $V_{n+1}$ et $V_n$ représentent respectivement la vitesse aux instants n+1 et n,
    *   En représente la valeur du champ au lieu de positionnement du point à l'instant n,
    *   $k_a$ et $k_i$ sont des coefficients,

-   le déplacement du point objet en fonction de la vitesse de déplacement calculée.

$k_a$ et $k_i$ sont dits, respectivement, coefficient d'amortissement et coefficient d'inertie.

$k_a$ peut être fonction de la distance d au but, et par exemple décroître lorsque le point objet se rapproche du point but.

Dans les modes de réalisation donnés ci-dessus, une valeur de champ d'image peut être associée à tout point d'une forme à animer, représentée sur l'image, et ceci pour tout instant n (le temps étant discrétisé). Le champ est une fonction vectorielle $\vec{E}$ définie en tout point de la forme ou d'une partie de la forme Tout point faisant partie de cette forme peut être repéré dans un système de coordonnées spatiales classiques, par exemple des coordonnées tridimensionnelles X, Y, Z. Selon l'invention sont ajoutées, à ces coordonnées classiques, des coordonnées ou paramètres "d'influence" qui correspondent en fait à la valeur du champ d'image au point géométrique considéré et à l'instant n considéré. Par conséquent, avec ces coordonnées supplémentaires, il est possible de décrire les influences que chaque point de la forme subit, que ce soient les influences d'autres parties de l'objet, ou celles d'autres objets, extérieurs à la forme elle-même.

Dans le second mode de réalisation, on peut en outre ajouter, à ces coordonnées de champ ou de potentiel, des coordonnées dynamiques $k_i$ et $k_a$, appelées respectivement paramètre "d'inertie" et paramètre de " souplesse ". La souplesse (donc le coefficient $k_a$) traduit que le fait que l'objet, au point considéré, s'amortit plus ou moins. Le coefficient $k_i$ correspond à la notion d'inertie (mathématique) en dynamique classique.

Selon l'invention, la description du mouvement est donc contenue dans la définition de ces coordonnées dynamiques supplémentaires. La description du mouvement est donc économique en termes de place mémoire dans un dispositif de calcul à l'aide duquel le procédé selon l'invention est mis en oeuvre.

Là encore, le champ peut dériver d'un potentiel.

Le procédé selon l'invention permet une modification immédiate des coordonnées dynamiques que constituent $E_n$ (la valeur du champ au point considéré) ou son potentiel et/ou $k_a$ et/ou $k_i$ (coefficients d'amortissement et d'inertie). Il permet donc une forte interactivité.

Les points objets, ou de la forme, peuvent être mémorisés et/ou affichés sur un écran, ou dispositif de visualisation, et déplacés selon le mouvement déterminé.

Dans le cas d'un objet décrit en terme de surfaces "NURBS", ces dernières sont définies par interpolation entre des sections, elles-mêmes formées par interpolation à partir de points de contrôle. On peut affecter, à chacun des points de contrôle, les coordonnées supplémentaires de champ (ou de potentiel), de souplesse et d'inertie, pour que les points de contrôle puissent être utilisés pour animer les surfaces créées. La description ainsi obtenue d'un objet, et de son mouvement, est compacte, beaucoup plus que la description classique effectuée en termes de polygones. Selon cette description classique, les polygones eux-mêmes constituent la base de donnée des objets. Cette compacité est très avantageuse puisque l'objet, ainsi que son mouvement, peuvent alors être stockés dans des mémoires de tailles plus faibles.

Selon un mode particulier de réalisation, le coefficient $k_a$ tend vers 0 lorsque la distance d au but tend vers 0: ainsi, l'inertie ( au sens physique du terme) se fait progressivement de moins en moins sentir, au fur et à mesure que le point se rapproche de sa cible.

Par exemple, le coefficient $k_a$ peut être une fonction parabolique décroissante de d, s'annulant pour d=0.

Un coefficient $k_a$ ayant la forme suivante remplit toutes ces conditions :

$$k_a = (\|d_n\|/d_l).[2- (\|d_n\|/d_l)]$$

Pour un coefficient $k_a$ voisin de 1, le champ est pratiquement proportionnel à l'accélération.

On peut également imposer au coefficient $k_a$ d'être constant pour toute distance d supérieur à une distance caractéristique $d_l$.

De préférence, la composante attractive du champ a un potentiel qui s'annule au point but. Ce choix permet d'arrêter le point objet lorsqu'il atteint son but.

La composante répulsive est, quant à elle, de préférence une fonction au plus décroissante en fonction de la distance du point objet au point obstacle considéré. Ainsi, l'influence du champ répulsif au voisinage du point obstacle est au plus supérieure ou égale à son influence à distance de ce point obstacle.

Par exemple, le potentiel associé à la composante répulsive du champ, pour un point obstacle $P_o$ donné, a la forme suivante, où d désigne la distance entre un point objet P courant et le point obstacle $P_o$ :

$$V (P) = k'/ d, \text{ si } d < d_0$$

$$V (P) = k'/ d_0, \text{ si } d \geq d_0$$

Selon un autre mode particulier de réalisation, au moins une composante du déplacement du point objet suivant un axe d'un repère de l'espace est uniquement fonction du signe de la composante de vitesse de déplacement calculée selon cet axe. Autrement dit, on peut, dans certains cas, considérer que le mouvement d'un point P ne se fait, selon l'axe en question, que selon des directions « quantifiées », c'est-à-dire 'à gauche', ou 'à droite', ou 'en haut' ou 'en 'bas'. Le mouvement a l'air continu si on l'observe « de loin » comme c'est le cas si le point P représente un pixel d'un écran.

D'une manière plus générale, l'invention a également pour objet un procédé de déplacement d'un point objet d'une image à animer, comportant un ensemble de points but (PB) à atteindre, ladite image comportant en outre, éventuellement, des points obstacles, ce procédé comportant les étapes suivantes :

- sélection d 'un premier point but à atteindre
- déplacement du point objet selon un procédé tel qu'exposé ci-dessus.

Le premier but à atteindre est, par exemple, le but le plus proche du point objet.

L'invention a également pour objet un dispositif pour générer une forme animée ou pour animer une forme, comportant les moyens suivants :

- des moyens pour déterminer des points géométriques définissant la forme dans l'espace
- des moyens pour attribuer à chaque point géométrique, un vecteur champ
- des moyens pour déterminer, ou calculer, le mouvement de chaque point selon une équation du mouvement, en fonction du champ en ce même point
- des moyens pour déplacer les points de la forme selon le mouvement ainsi déterminé.

L'invention a également pour objet un dispositif pour générer une forme animée, ou pour animer une forme, comportant :

- des moyens pour déterminer des points géométriques définissant la forme dans l'espace
- des moyens pour déterminer, ou calculer, le mouvement de chaque point en fonction du déplacement d'au moins un autre point de la forme
- des moyens pour déplacer les points de la forme selon le mouvement ainsi déterminé.

Le mouvement de chaque point peut être déterminé en fonction du déplacement des points qui sont les plus proches voisins dudit point.

L'invention a également pour objet un dispositif pour déplacer un point objet d'une image à animer vers un point but (PB) de l'image, ladite image comportant en outre, éventuellement, des points obstacles, ce dispositif comportant :

- des moyens pour définir une fonction de champ, dite champ d'image, comportant :

  * une composante attractive associée au point but et s'annulant en ce point
  * et, si des points obstacles sont présents, une composante répulsive associée à chacun des points obstacles

- des moyens pour calculer la vitesse de déplacement du point objet, proportionnellement à la valeur du champ d'image en ce point objet
- des moyens pour déplacer le point objet en fonction de la vitesse de déplacement calculée.

Enfin, l'invention a également pour objet un dispositif pour déplacer un point objet d'une image à animer vers un point but (PB) de l'image, ladite image comportant en outre, éventuellement, des points obstacles, ce dispositif comportant :

- des moyens pour définir une fonction de champ, dite champ d'image, comportant :

  * une composante attractive associée au point but, et s'annulant en ce point
  * et, si des points obstacles sont présents, une composante répulsive associée à chacun des points obstacles

- des moyens pour calculer la vitesse de déplacement du point objet, selon la formule

$$V_{n+1} = k_a \cdot V_n + k_j E_n,$$

où :

  * $V_{n+1}$ et $V_n$ représentent respectivement la vitesse aux instants n+1 et n,
  * $E_n$ représente la valeur du champ au lieu de positionnement du point à l'instant n,
  * $k_a$ et $k_i$ sont des coefficients appelés coefficient d'amortissement et d'inertie,

- des moyens pour déplacer le point objet en fonction de la vitesse de déplacement calculée,

$k_a$ peut être fonction de la distance d au but et être par exemple tel que le point objet se déplace avec une inertie décroissante lorsqu'il se rapproche du point but.

De préférence, un tel dispositif comporte en outre des moyens pour modifier en temps réel la valeur de $k_a$ et/ou de $k_i$.

Le procédé ou le dispositif selon l'invention permettent de calculer, par exemple, le mouvement d'un objet à partir du "but" du mouvement.

D'une manière générale, cette technique permet de calculer le mouvement d'un objet à partir des champs d'influence (champs attracteurs ou champs répulsifs, déjà définis ci-dessus) qui définissent l'environnement de l'objet. Ainsi, dans l'exemple du "but" du mouvement, donné ci-dessus, le "but" est une influence que subit l'objet, ou un champ attracteur auquel il est soumis.

### Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente un point objet et un point but, dans un plan
- la figure 2 représente un point objet, un point but et un obstacle, dans un plan
- les figures 3 à 37 sont des exemples de modélisation, selon l'invention, de trajectoire d'un point objet soumis à diverses conditions environnementales
- la figure 38 représente schématiquement des étapes d'un procédé selon l'invention
- la figure 39 représente schématiquement le maillage d'une surface d'un objet 3D engendrée par un procédé selon l'invention
- les figures 40A et 40B représentent schématiquement la structure d'un dispositif pour mettre en oeuvre un procédé selon l'invention.

### Description détaillée de modes de réalisation de l'invention

Un premier mode de réalisation de l'invention va être décrit, qui concerne une représentation bidimensionnelle (2D).

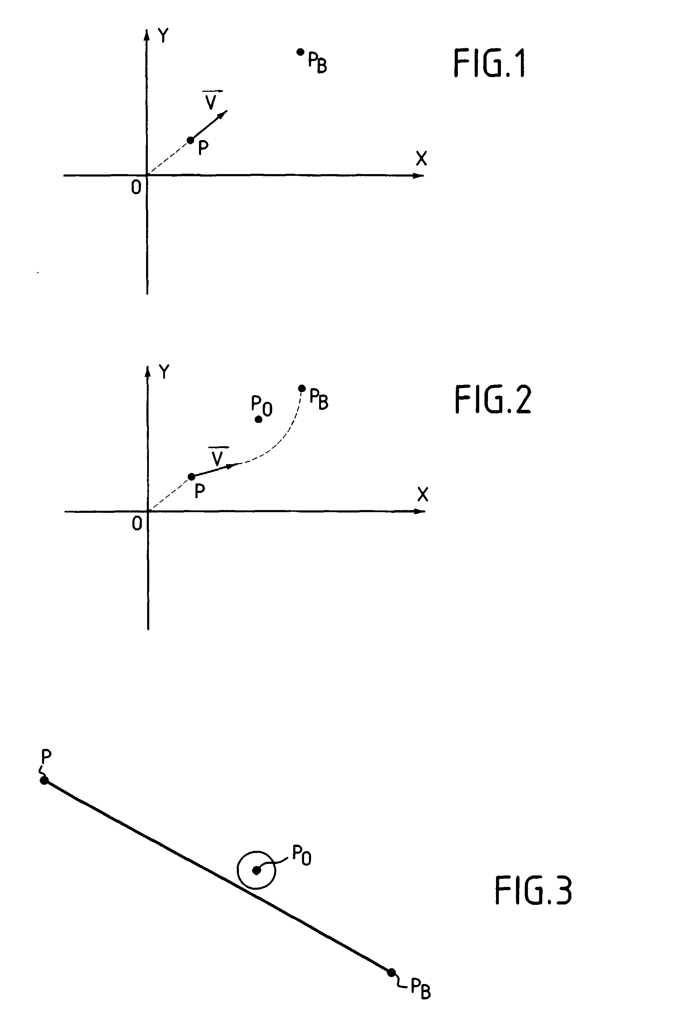

Comme illustré sur la figure 1, on se place dans un plan de repère (O,X,Y).

Un objet ou un personnage (ou un point ou un pixel) P, encore appelé "animate", de coordonnées (x,y) est placé initialement à l'origine O et doit se déplacer vers un but $P_B$ de coordonnées $(x_B, y_B)$

Selon l'invention, le but engendre un champ attractif, et propage ainsi son influence dans tout l'espace selon une certaine loi.

Un tel champ E (vecteur) peut dériver d'un potentiel V (scalaire) selon la formule $E(P) = -\nabla V (P)$ où $\nabla$ désigne l'opérateur «Gradient ».

Cela veut dire que les composantes $E_x, E_y$.. du vecteur E(P) sont données par les relations

$$E_x = -(\partial V/\partial x), \quad E_y = -(\partial V/\partial_y)...$$

Le potentiel produit par le but est, par exemple, de la forme $V_B(P) = k.\|PP_B\|^2$., avec k différent de zéro. Un tel potentiel, fonction croissante de la distance $\|PP_B\|$, traduit le fait que l'influence du but est d'autant plus grande que le point objet en est éloigné.

En termes de champ, on a alors (en 2D):

$$Ex = -(\partial V_B/\partial_x) = -2.k.(x- x_B) \text{ et } E_y = -(\partial V_B/\partial_y) = -2.k.(y- y_B)$$

Les lignes de champ générées par le but $P_B$ constituent alors un faisceau de droites passant par $P_B$. Le champ est, dans cet exemple, radial et orienté vers $P_B$. Son intensité est nulle en $P_B$ et croît avec la distance.

Le champ E est par exemple proportionnel à la vitesse (dP/dt) du point ou de l'objet. Dans ces conditions, la vitesse du point est obtenue, dans le cas de potentiel ci-dessus, par les équations:

$$(dx/dt)= -\lambda.(x-x_B), \text{ et } (dy/dt)= -\lambda.(y-y_B) \tag{1}$$

Si le champ s'annule, la vitesse s'annule aussi, et donc le personnage s'arrête (il n'a pas d'inertie). Pour cela on prend pour un but $P_B$ à atteindre une fonction champ qui s'annule en $P_B$. Ceci est par exemple réalisé si la fonction potentiel admet un extremum (est minimale ou maximale) en $P_B$.

L'intégration des équations précédentes donne :

$$x(t) = x_B + B.exp(-\lambda.t) \text{ et } y(t) =y_B + B'.exp(-\lambda.t)$$

où B et B' sont des constantes d'intégration.

Ainsi, le point atteint son but attracteur. Sa vitesse est d'abord grande (elle est égale au vecteur de composantes $[\lambda x_B, \lambda y_B]$ au départ de l'origine) puis décroît progressivement jusqu'à tendre vers la valeur 0.

On peut, selon une variante, proposer que les équations précédentes ne donnent pas la vitesse mais la direction du point, le module de la vitesse étant constant (ou en tout cas contrôlable).

Soit, maintenant, $\delta$ le module de la vitesse : il exprime le déplacement élémentaire que l'on veut imposer au point objet. Pour que la norme de la vitesse soit imposée égale à $\delta$, on a les équations suivantes du mouvement, qui se généralisent aussi aisément à 3 dimensions:

$$(dx/dt) = (\delta/\|E\|).E_x \text{ et } (dy/dt) = (\delta/\|E\|).E_y \tag{2}$$

Selon un mode particulier de réalisation, on peut, dans certains cas, considérer que le mouvement d'un point P ne peut se faire que selon des directions « quantifiées », c'est-à-dire 'à gauche', ou 'à droite', ou 'en haut' ou 'en 'bas'. Le mouvement a l'air continu si on l'observe « de loin » comme c'est le cas si le point P représente un pixel d'un écran. Dans ces conditions, un algorithme de mouvement n'a besoin de regarder que le signe des quantités $(dx/dt)$ et $(dy/dt)$, c'est-à-dire le signe des quantités $E_x$ et $E_y$ . Par exemple si $E_x>0$ et $E_y>0$, il faut déplacer le pixel 'à droite' et en 'bas'. Ainsi, tant que le but n'est pas atteint, on examine le signe des quantités $E_x$ et $E_y$ et le pixel est déplacé en conséquence.

On va maintenant décrire le cas où il existe un obstacle centré en $P_o$ (de coordonnées $(x_0, y_0)$, le point P devant se rendre au but en contournant ou en évitant l'obstacle (figure 2).

Un tel obstacle $P_o$ est générateur d'un champ répulsif dont l'influence décroît en fonction de la distance et est, par exemple, plus importante localement, au voisinage de l'obstacle. Il peut notamment exister une distance d'influence ou une zone d'influence, autour de l'obstacle, au-delà de laquelle le champ répulsif de l'obstacle est nul. C'est, par exemple, un champ de potentiel :

$$V_O(P) = k'.\|PP_o\|^{-1} \text{ si } \|PP_o\| < d_i \text{ (barrière d'influence à distance di de } P_o) \tag{3}$$

et $V_O(P) = k'.d_i^{-1}$ (une constante) ailleurs.

Une telle fonction n'est pas discontinue au niveau de la barrière d'influence (cela donnerait un champ infini en cet endroit). Cependant, le gradient ( le champ) donne une discontinuité, et ceci peut produire un effet de répulsion brutal sur l'animate, ou le point, au moment de la traversée de la barrière d'influence.

Une telle fonction $V_O(P)$ prend une valeur infinie pour $PP_O = 0$. Mais, s'agissant d'un obstacle, ce dernier est en principe évité et jamais atteint.

Dans la zone d'influence le gradient de la fonction $V_o(P) = k'.\|PPo.\|^{-1}$ donne un champ $E_o(P) = + k'.PP_o.\|PP\|^{-2}$ (le signe + donne un champ répulsif : k' doit être >0 pour que le champ soit répulsif). En résumé, le champ produit par l'obstacle $P_O$ est :

- pour $O < \|PP_o\| < d_i$, $E_o = k'.PPo.\|PP_o\|^{-2}$
- pour $d_i<\|PP_O\|$, $E_o= 0$.

Le champ total E auquel est soumis le personnage ou le point est la somme des divers champs (principe d'additivité des champs) :

$$E = E_B + E_o.$$

D'où:

$$(dx/dt) = (\delta/\|(E_B + E_o)\|).(E_B + E_o)_X$$
$$(dy/dt) = (\delta/\|(E_B + E_o)\|).(E_B + E_o)_Y \qquad (4)$$
$$(dz/dt) = (\delta/\|(E_B + E_o)\|).(E_B + E_o)_Z$$

On peut donc traiter le cas le plus général du point P cherchant à atteindre un but $P_B$ (générateur d'un potentiel $V_B(P) = k.\|PP_B\|^2$) dans un univers (2D par exemple) contenant un obstacle $P_o$. L'influence de l'obstacle (générateur d'un potentiel $V_o(P) = k'.\|PP_B\|^{-1}$) se traduit par les équations (5) :

$$(dx/dt) = (\delta/\|(E_B + E_o)\|).[-k.(x - x_B) + k'. (x - x_O). \|PP_O\|^{-2}] \qquad (5)$$

$$(dy/dt) = (\delta/\|(E_B + E_o)\|).[-k.(y - y_B) + k'. (y - y_o) \|PP_o\|^{-2}]$$

Pour une étude qualitative, on considère seulement les signes de ces quantités :

$$Sgn(dx/dt) = S_{gn} [ -k.(x - x_B) + k' (x - x_0).\|PP_{o\|}\|^{-2}]$$
$$Sgn(dy/dt) = S_{gn} [ -k.(y - y_B) + k' (y - y_0) \|PP_{o\|}\|^{-2}] \qquad (6)$$

Du fait de la discontinuité du champ au voisinage de la barrière d'influence de l'obstacle, le point mobile P peut y subir un effet brutal de changement de trajectoire. Il y a alors comme la « surprise » de rencontrer un obstacle non prévu. Ceci se comprend puisque la notion d'action à distance, propre à la notion de champ, est précisément supprimée au-delà de la barrière d'influence, par définition même de cette barrière.

La discontinuité du champ peut s'exprimer comme un vecteur $\Delta E$ de composantes :

$$\Delta E_x = (x_d - x_o).d_i^{-2} \text{ et } \Delta Ey =(y_d - y_o)^{-2} d_i^{-2} \qquad (7)$$

où $x_d$ et $y_d$ sont les composantes du point P situé à la distance $d_i$ de $P_O$ (à la barrière d'influence).
Si l'amplitude des composantes $\Delta E_x$ et $\Delta E_y$ est telle que Sgn(dx/dt) et Sgn(dy/dt) changent, on est en présence d'une sorte de « choc » (mais il n'y a pas de contact), avec changement de direction. L'entrée dans la zone d'influence provoque une déviation de la trajectoire.
Dans le cas de plusieurs (N) obstacles $P_{O1}$, $P_{O2}...$, $P_{ON}$ une généralisation conduit aux formules suivantes (où la valeur $k'_j$ est nulle en dehors de la zone d'influence de l'obstacle $P_{oj}$):

$$(dx/dt) = N.\{-k.(x - x_B)+\sum_{(j=1,N)} [k'_j. (x - x_{oj}) \|PP_{oj}\|^{-2} ]\}$$
$$(dy/dt) = N.\{-k.(y - y_B)+ \sum_{(j=1,N)} [k'_j. (y - y_{oj}) \|PP_{oj}\|^{-2} ]\} \qquad (8)$$
$$(dz/dt) = N.\{-k.(z - z_B)+ \sum_{(j=1,N)} [k'_j- (z - z_{oj}). \|PP_{oj}\|^{-2} ]\}$$

avec $N =(\delta/\|(E_B + \Sigma_{(j=1,N)} (E_{oj}))\|)$
où $E_{oj}$ désigne le champ associé à l'obstacle $P_{oj}$.
Selon le modèle explicité ci-dessus, l'influence de l'inertie d'un animate ou d'un point est négligée. La trajectoire correspondante est calculée en considérant que le champ total E auquel est soumis le point est directement proportionnel à la direction de sa vitesse v. Mathématiquement le vecteur vitesse v est, dans ce cas, donné par la formule

$$v=(\delta/\|E\|)E,$$

le coefficient $(\delta/\|E\|)$ étant destiné à produire un déplacement élémentaire égal à $\delta$.

L'algorithme de calcul de $P_{n+1}$ en fonction de $P_n$ ( qu'on appelle aussi l'Actionneur de l'animate) est donc le suivant ($P_n$ désigne la position actuelle et $P_{n+1}$ la position suivante):

$$P_{n+l}= P_n + (\delta/\|En\|)E_n \qquad (9)$$

où $E_n$ est le champ total en $P_n$

Selon un autre mode de réalisation on peut donner au point objet une inertie variable, ou par exemple, une inertie constante « loin » d'un but à atteindre, et une inertie décroissante au fur et à mesure que ce but est approché. Ceci a un effet de « lissage » de la trajectoire lors de l'évitement d'obstacles (l'animate est entraîné par son inertie), et interdit un éventuel mouvement oscillatoire indéfini autour d'un but puisque l'inertie décroît, jusqu'à devenir très faible ou même nulle une fois le but atteint (ceci a le même effet qu'un « frottement » progressif).

A cette fin, un but $P_B$ présente une distance caractéristique $d_l$ à partir de laquelle l'inertie décroît.

Par ailleurs l'Actionneur de l'animate a alors la structure suivante :

1)

$$V_{n+l}= k_a.v_n + E_n$$

2)

$$P_{n+1} = P_n + (\delta/\|v_{n+1}\|).v_{n+l} \qquad (10)$$

Le coefficient $k_a$ , coefficient d'élasticité ou d'amortissement, dépend de la distance $\|P_nP_B\|$. Si $\|P_nP_B\|>d_l$, on peut prendre par exemple $k_a=1$. Lorsqu'on s'approche du but, $k_a$ décroît vers 0 pour que l'influence de l'inertie se fasse progressivement de moins en moins sentir. Le coefficient $k_a$ sert donc à, progressivement, diminuer l'inertie de l'animate lors de son approche du but à atteindre. Si $k_a$ est très faible le champ est pratiquement proportionnel à la vitesse, et si $k_a$ est très voisin de 1 le champ est pratiquement proportionnel à l'accélération. On peut vérifier que, si $k_a=0$, on est ramené au cas précédent où l'inertie est annihilée.

D'une manière générale, on prendra $0 < k_a < 1$. Les cas où $k_a = 0$ ou $k_a = 1$ ont été commentés ci-dessus. Pour $k_a > 1$, le système diverge.

La loi de décroissance de $k_a$ en fonction de $\|P_nP_B\|$ est, par exemple, parabolique:

$$k_a = (\|P_nP_B\|/d_l). [2-(\|P_nP_B\|/d_l)] \qquad (11)$$

Selon une variante, on introduit un coefficient supplémentaire (noté $k_l$ et par exemple compris entre 0 et 1), indépendant du but et tel que la vitesse de l'animate soit calculée selon la nouvelle formule (12) :

$$v_{n+1} = k_l.k_av_n+E_n. \qquad (12)$$

Ceci permet une plus grande souplesse dans le réglage de l'inertie de l'animate.

Dans le procédé selon l'invention, la représentation de l'univers dans lequel évolue un point ou un objet est faite en termes de champ. Par exemple si cet univers est constitué d'obstacles qu'il faut éviter, ces champ sont des champs répulsifs.

L'algorithme de déplacement d'un animate, au point objet, peut être donné par les règles suivantes.

A l'instant n l'animate est dans l'état $\psi_n$. Cet état est par exemple constitué par un ensemble de données cinématiques, à savoir la position $P_n$ de l'animate, sa vitesse $v_n$, et son déplacement élémentaire $\delta$.

Une chaîne d 'action (ou "actionneur") de l'animate, capable de produire, à l'instant n+I, son nouvel état $\psi_{n+1}$, en fonction des obstacles et du but à atteindre, présente par exemple la structure suivante:

1) Calculer le champ total En (composante attractive et répulsive) au point $P_n$.
2) Calculer la nouvelle vitesse avec par exemple la formule $V_{n+1} = k_a V_n + E_n$
   avec $k_a = (\|P_n P_B\|/d_I).[2 - (\|P_n P_B\|/d_I)]$ pour $\|P_n P_B\| < d_I$ et, par exemple $k_a = 1$ sinon.
3) Calculer la nouvelle position $P_{n+1} = P_n + (\delta/\|v_{n+1}\|).v_{n+1}$

Selon un mode de réalisation plus général, la vitesse de déplacement du point objet peut être calculée selon la formule :

$$V_{n+1} = k_a \, V_n + k_i \, E_n \,,$$

où * et $V_{n+1}$ et $V_n$ représentent respectivement la vitesse aux instants n+1 et n

* $E_n$ représente la valeur du champ (avec ses composantes attractive(s) et/ou répulsives) au lieu de positionnement du point à l'instant n
* $k_a$ et $k_i$ sont, respectivement, des coefficients d'amortissement et d'inertie.

Le rôle de $k_a$ a déjà été expliqué ci-dessus. On prendra encore, en général, $0 < k_a < 1$, les valeurs $k_a = 0$ ou 1 étant également possibles. $k_a$ peut, ici aussi, être choisi comme dépendant de la distance, par exemple selon la formule (11) ci-dessus, avec les mêmes effets que ceux déjà expliqués.

Le coefficient $k_i$ ($\geq 0$ et, en général, compris entre 0 et 1) correspond à l'inertie (au sens mathématique du terme) de la physique classique.

Si $k_i$ est faible, l'inertie est grande (et inversement) et, si $k_a$ est faible, l'amortissement est grand (ou la "souplesse" est faible) et inversement.

On remarque que, si $k_a = 0$, l'effet de l'inertie est bien annihilé, quand bien même $k_i$ (coefficient mathématique) est différent de zéro.

On peut également introduire un autre coefficient $k_e$ selon la formule suivante :

$$V_{n+1} = k_e \, k_a \, V_n + k_i \, E_n$$

$k_a$ et $k_i$ ont la même signification que ci-dessus.
$k_e$ est un coefficient multiplicateur de $k_a$.

**Exemples**

Sur les figures 3 à 34 qui illustrent ces exemples, un ou plusieurs obstacle(s) est (sont) centré(s) en $P_o$ (ou $P_{oi}$) et un but en $P_B$.

Le cercle autour de $P_o$ est de rayon $d_{in}$ (barrière d'influence) et le cercle autour de $P_B$ est de rayon $d_I$.

La première série d'exemples suppose :

1- Un animate est situé initialement en position P(10, 10, 0), et a une vitesse initiale nulle. Chaque passage par l'algorithme produit un déplacement $\delta = 1$.
2- Un but à atteindre est situé en position $P_B$ (320, 180, 0). Le coefficient d'influence k est fixé constant égal à 2.5. Le potentiel généré par le but est de la forme $V_B (P) = k \|PP_B\|^2$.
3- Un obstacle à éviter est situé en position $P_o$ (200, 90,0). Le potentiel généré par l'obstacle est de la forme $V_o (P) = k'. \|PP_o\|^{-1}$ si $\| PP_o \| < d_i$ (barrière d'influence) et $V_o(P) = k'.d_i^{-1}$ (une constante) ailleurs.
4- L'algorithme de calcul est le suivant :

1)

$$V_{n+1} = k_a \, v_n + E_n$$

(avec $E_n = -\triangledown V_n$)
2)

$$P_{n+1} = P_n + (\delta/\|V_{n+1}\|).V_{n+1}$$

Le coefficient $k_a$ dépend de la distance $\|P_n P_B\|$ :

- Si $\|P_n P_B\| > d_l$, $k_a = 1$.
- Sinon: $k_a = (\|P_n P_B\|/ d_l). [2 - ((\|P_n P_B\|/ d_l)]$.

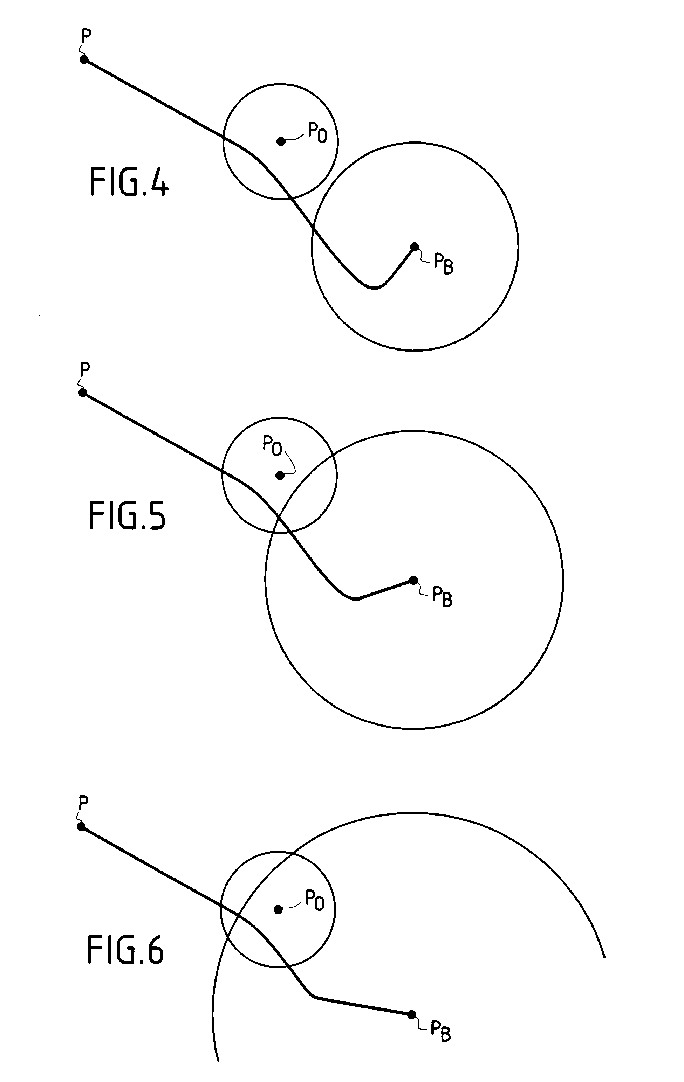

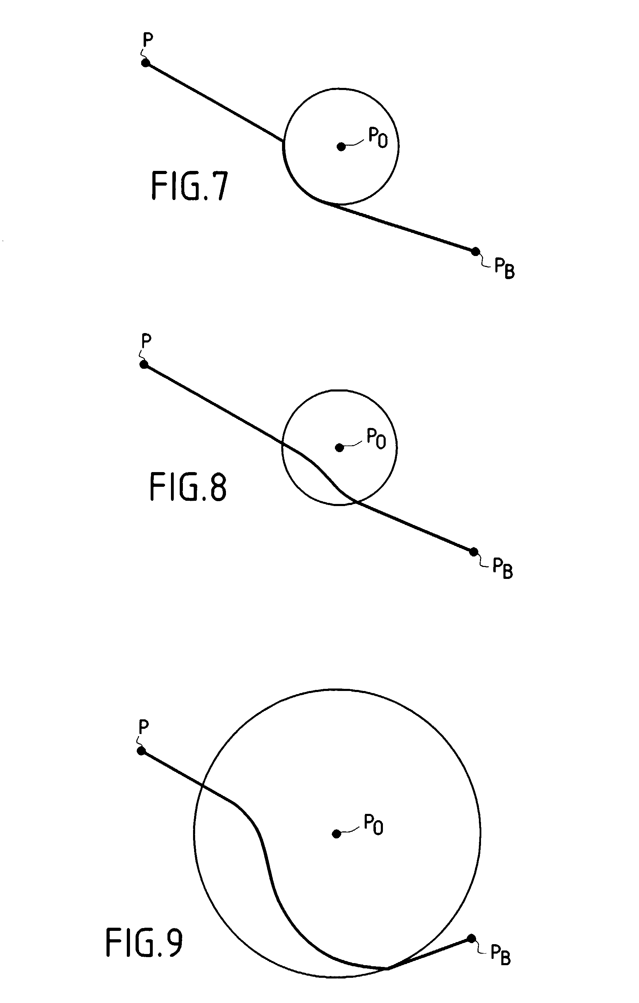

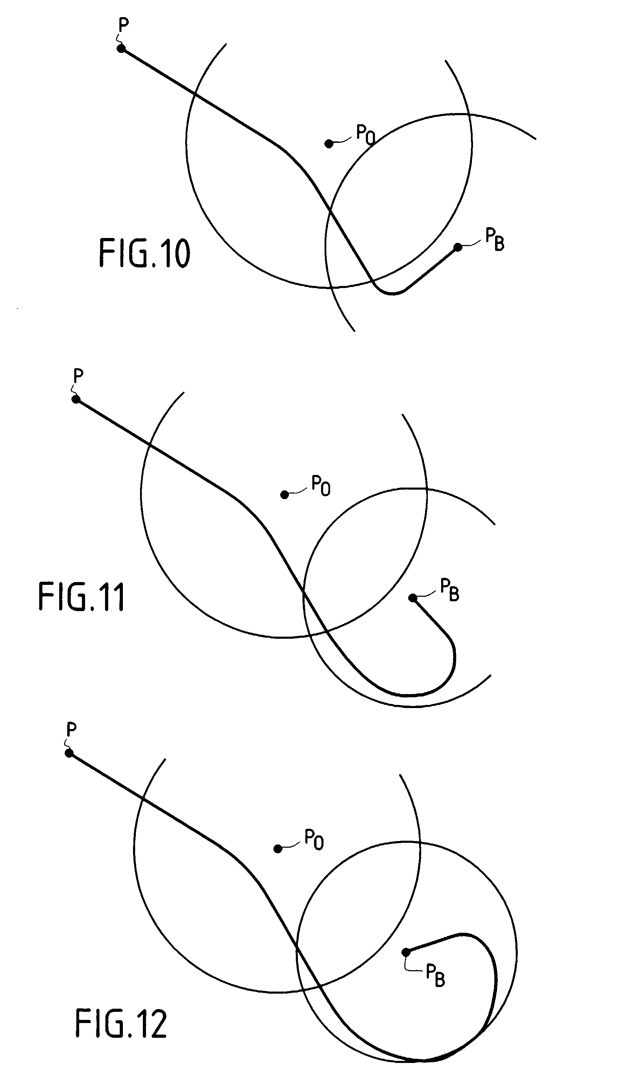

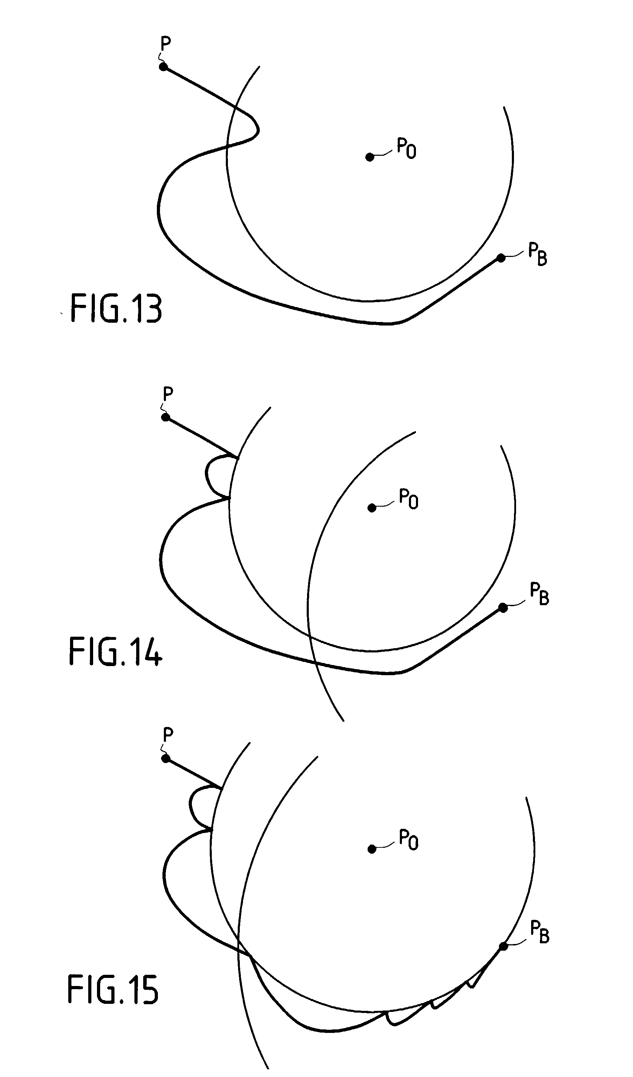

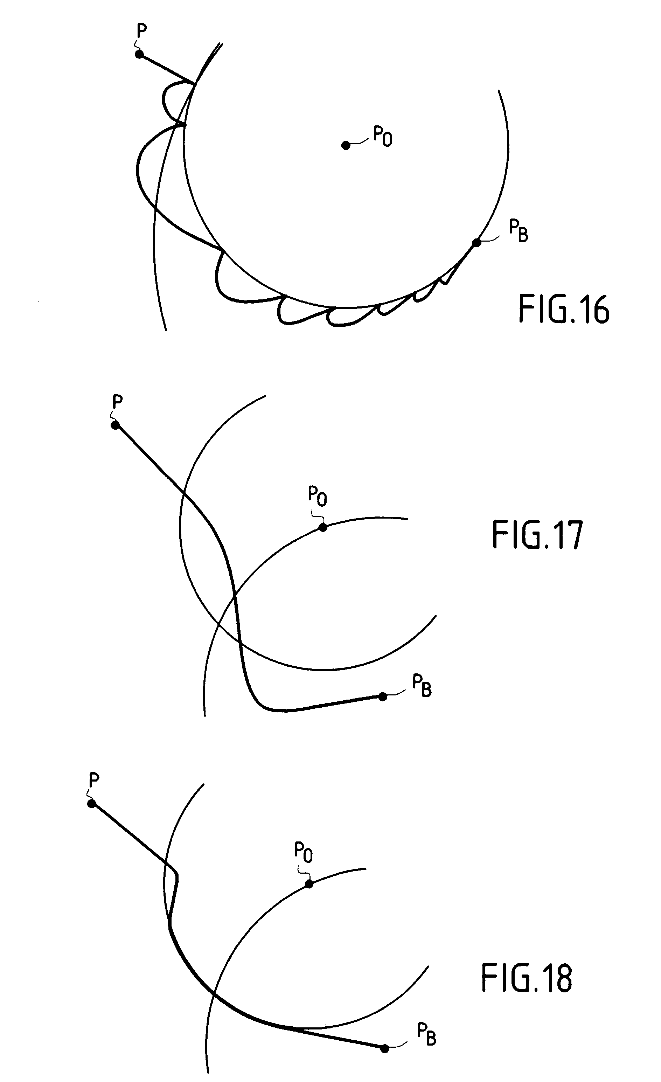

Premier exemple (figure 3) : $d_l = 0$, $d_i = 16$
Selon cette première trajectoire, l'animate va au but selon une droite sans être influencé par l'obstacle (il ne rentre pas dans sa zone d'influence). Ce cas très particulier se produira à certains instants d'une séquence d'animation. Mais, dans le cas général, la trajectoire du (ou des) point(s) objets rencontrera la zone d'influence de l'obstacle et cette trajectoire sera donc déviée (voir tous les exemples suivants).
Deuxième exemple (figure 4) : $d_i = 50$, k' = 30 000, $d_l = 90$
Il y a un effet de freinage qui évite les oscillations autour du but.
Troisième exemple (figure 5) : $d_i = 50$, k' = 30 000, $d_l = 130$ : la zone d'inertie décroissante est agrandie. Le freinage précédent apparaît moins brutal.
Quatrième exemple (figure 6) : $d_i = 50$, k' = 30 000 ; on augmente encore la zone d'inertie décroissante, en prenant $d_l = 170$. L'inertie diminuant plus tôt avant d'arriver au but, l'animate voit sa trajectoire s'infléchir en conséquence.
Cinquième exemple (figures 7 et 8) : $d_i = 50$ ; on prend maintenant une très grande valeur pour $d_l$, soit $d_l = 1000$ (le cercle centré sur le but n'est plus alors visible). L'inertie est en quelque sorte «négligeable», ce qui fait que l'animate peut à peine pénétrer l'obstacle.
Cependant, l'animate est « bloqué » par l'obstacle parce que le coefficient d'influence (k'=30000, figure 7) de l'obstacle est de valeur élevée. Si ce coefficient est divisé par 10 (k'=3000, figure 8) l'animate « pénètre » l'obstacle malgré la faible inertie.
Sixième exemple (figure 9) : $d_l = 1000$, mais, la barrière d'influence de l'obstacle est augmentée : ici, $d_i=130$, et l'inertie est toujours « négligeable ». Bien que k' soit de forte valeur (30000), l'animate pénètre l'obstacle. Ceci s'explique par la grande contribution du but, du fait que l'animate en est éloigné (le champ généré par le but est d'autant est plus important que le but est éloigné).
Septième exemple (figure 10) : $d_i = 130$, k' = 30 000 ; on introduit de nouveau une valeur de $d_l$ plus faible ($d_l =120$), ce qui donne une inertie non négligeable à l'animate.
Huitième exemple (figure 11) : $d_i = 130$, k' = 30 000 ; la valeur de $d_l$ est ici assez critique. Pour $d_l =100$, l'animate a du mal à atteindre son but. En effet, son inertie décroît lentement du fait de sa faible pénétration dans la zone à inertie décroissante.
Neuvième exemple (figure 12) : $d_i = 130$, k' = 30 000 ; pour $d_l =99$, l'animate a encore plus de mal à atteindre son but car sa course, au sortir de la zone d'influence de l'obstacle, est presque tangente à la zone où son inertie commence à décroître.
Dixième exemple (figure 13) : $d_i = 130$ ; on prend maintenant $d_l =180$, et on multiplie par 10 le coefficient d'influence de l'obstacle, ce qui donne k'=300000. L'entrée dans la zone d'influence de l'obstacle produit un « rebondissement » (un grand changement de direction dans une petite partie de l'espace). Ensuite, l'animate est soumis à l'attraction du but et à une perte d'inertie.
Onzième exemple (figure 14) : $d_i = 130$ ; on conserve $d_l =180$ et on impose un coefficient d'influence de l'obstacle « énorme», soit k'=$10^7$. On obtient une succession de rebonds, qui sont en faits dus, en bonne part, à l'inertie de l'animate.
Douzième exemple (figure 15) : k' = $10^7$ ; on augmente un peu la taille de la zone d'influence de l'obstacle ($d_i=150$) ainsi que celle de la zone de décroissance de l'inertie ($d_l =250$). La figure 15 montre l'influence de la diminution d'inertie, associée à celle d'une très grande influence de l'obstacle.
Treizième exemple (figure 16) : $d_i = 150$, k' = $10^7$ ; pour un $d_l$ encore plus grand ($d_l =300$), l'influence de l'inertie est moins marquée. L'amplitude des rebonds est plus faible, et la tendance de l'animate est d'épouser de plus en plus l'obstacle.
Une deuxième série d'exemples (14 à 18) concerne la possibilité de faire varier $k_l$ selon la formule (12) ci-dessus.
Les paramètres de ces exemples sont les suivants :

1- Un animate est situé initialement en la position P(10, 10, 0), et a une vitesse initiale nulle. Chaque passage par l'algorithme produit un déplacement $\delta=1$.

2- Un but est situé en position $P_B(260, 240, 0)$. Le coefficient d'influence k est fixé égal à 2.5. La distance $d_I$ est fixée égale à 160. Le potentiel généré par le but est de la forme $V_B(P) = k\|PP_B\|^2$.

3- Un obstacle est situé en position $P_O(200, 90, 0)$. Le coefficient d'influence k' est fixé constant et égal à 70000. Le potentiel généré par l'obstacle est de la forme $V_O(P) = k'.\|PP_O\|^{-1}$ si $\|PP_O\| < d_i$, avec $d_i=130$.

4- L'algorithme de calcul est le suivant:

1)

$$v_{n+1} = k_I.\ k_a\ .v_n + E_n$$

2)

$$P_{n+1} = P_n + (\delta/\|v_{n+1}\|).v_{n+1}$$

Exemples 14 à 16 (figures 17 à 19). ils correspondent à, respectivement, $k_I = 1$, $k_I = 0{,}90$, $k_I = 0{,}60$.

On peut, aussi, prendre $k_I > 1$ (cas de l'exemple suivant) :

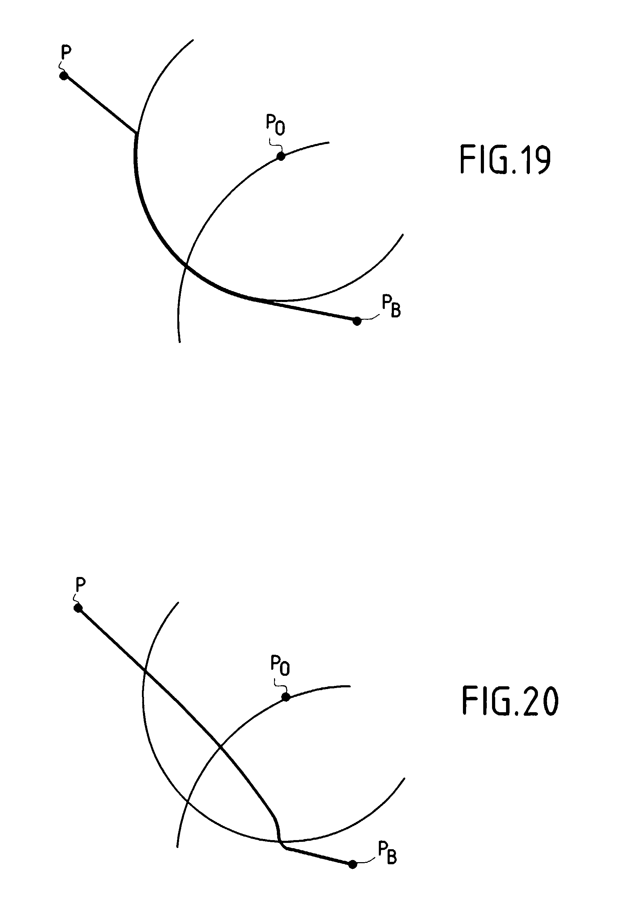

Dix-septième exemple (figure 20) : $k_I = 1{,}02$

L'animate est alors moins sensible à l'obstacle. Sa course dans la zone d'influence de l'obstacle ressemble à une droite.

Une troisième série d'exemples concerne le cas d'un but à atteindre et de plusieurs obstacles à éviter.

Ces exemples supposent les paramètres suivants:

1- Un animate, situé initialement en position P(10, 10, 0), de vitesse initiale nulle. Chaque passage par l'algorithme produit un déplacement $\delta=1$.

2- Un but à atteindre, situé en position $P_B(260, 240, 0)$. Le coefficient d'influence k est fixé constant égal à 2.5. Le potentiel généré par le but est de la forme $V_B(P) = k\ \|PP_B\|^2$.

3- Chaque obstacle à éviter crée chacun un potentiel de la forme $V_O(P) = k'.\ \|PP_O\|^{-1}$ si $\|PP_O\| < d_i$ (barrière d'influence) et $V_O(P) = k.d_i^{-1}$ (une constante) ailleurs.

4- L'algorithme de calcul est le suivant :

1)

$$v_{n+1} = k_I.k_a.v_n + E_n$$

(avec $E_n=-\triangledown V_n$)

2)

$$P_{n+1} = P_n + (\delta/\|v_{n+1}\|).v_{n+1}$$

Le coefficient $k_a$ dépend de la distance $\|P_nP_B\|$. Si $\|P_nP_B\|>d_I$, $k_a=1$. Sinon $k_a =(\|P_nP_B\|/d_I).[2 - (\|P_nP_B\|/d_I)]$.

$k_I$ est fixé à 0.9.

Pour les exemples 18 à 20, deux obstacles sont placés : l'un en $P_O$, de coordonnées (200, 90, 0), et pour lequel $d_i = 130$, et l'autre en $P_O'$, de coordonnées (120, 180, 0) et pour lequel $d_i' = 100$. Par ailleurs, la distance $d_I$ au but à partir de laquelle l'inertie commence à décroître vaut $d_I =100$. Les coefficients d'influence des deux obstacles sont désignés par $k_o$ et $k_o'$.

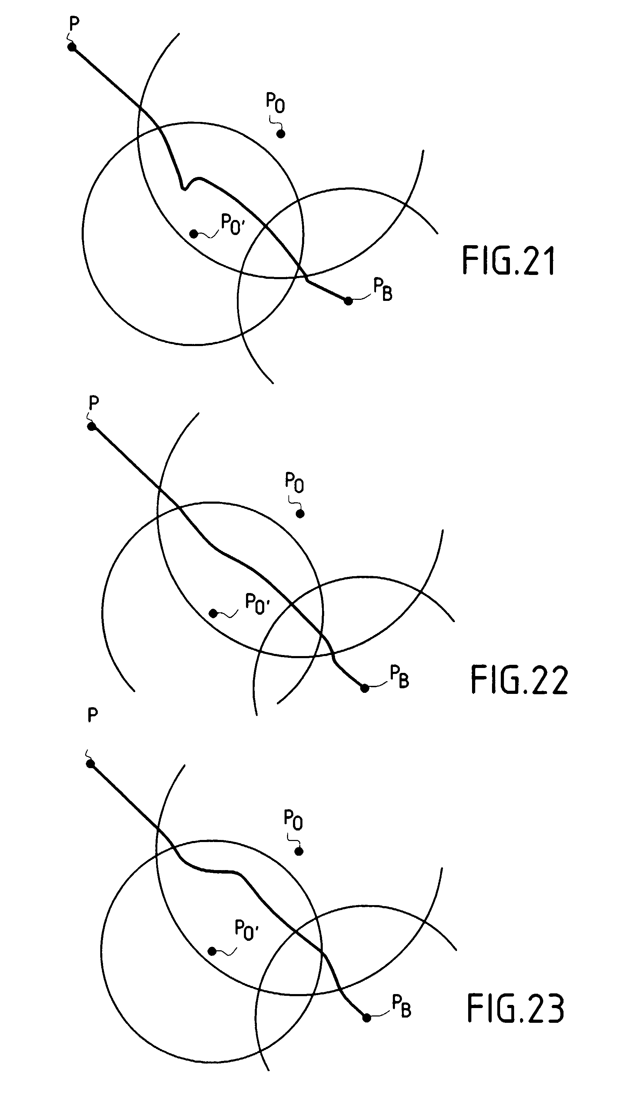

Dix-huitième exemple (figure 21) : $k_o = 30000$ et $k_o' = 20000$.

L'obstacle $P_O$ situé aux coordonnées (200, 90, 0) a ici une influence supérieure à celle de l'obstacle $P_O'$. L'animate l'évite donc plus ostensiblement. Mais, se rapprochant dangereusement du deuxième obstacle, il y subit une sorte de 'rebond', d'amplitude cependant limitée du fait de la valeur de $k_I$ (égale à 0.9 et non à 1.0).

Dix-neuvième exemple (figure 22) :

Les deux obstacles ont la même valeur pour leur coefficient d'influence (k' = 20000). Le 'rebond' a disparu.

Vingtième exemple (figure 23) : $k_o = 20000$, $k_o' = 20000$

L'obstacle situé aux coordonnées (120, 180,0) a le plus d'influence.

Les exemples 21 et 22 concernent le cas de trois obstacles, $P_{01}$, $P_{02}$, $P_{03}$ assez rapprochés.

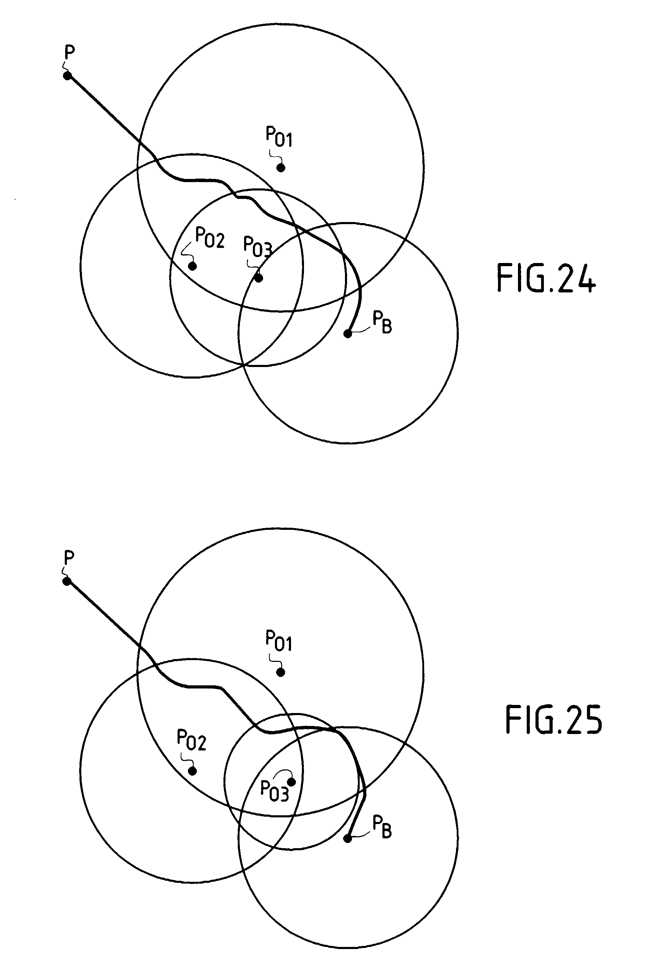

<u>Vingt et unième exemple (figure 24)</u> : les paramètres des obstacles sont:

$P_{O1}$ : (X=200, Y=90, Z=0) ($k'_1$ = 20000, $d_{i1}$ = 130)
$P_{O2}$ : (X=120, Y=180, Z=0) ($k'_2$ = 30000, $d_{i2}$ = 100)
$P_{O3}$ : (X=180, Y=190, Z=0) ($k'_3$ = 20000 $d_{i3}$ = 80)

Le but est atteint après quelques circonvolutions.

<u>Vingt-deuxième exemple (figure 25)</u> : les deux premiers obstacles sont les mêmes que précédemment, mais les paramètres du troisième sont modifiés :

$P_{O3}$ :(X=210, Y=190, Z=0) ($k'_3$ = 28000, $d_{i3}$ = 60)

$P_{O3}$ est alors le plus gênant et a une plus grande influence, mais sur une plus courte distance.

Une quatrième série d'exemples (23 à 34) concerne le cas d'un but à atteindre et d'un bloc d'obstacles à éviter.

On a choisi un bloc de 15 obstacles identiques dont les centres sont régulièrement distants de la quantité 50, selon une grille de 3 lignes de 5 obstacles chacune. La barrière d'influence de chacune des sphères est fixée à $d_i$ =25, ce qui fait que les figures montrent un bloc de 15 cercles tangents. Les coordonnées du centre du I$^{er}$ cercle, en haut à gauche, sont définies en (100, 100, 0).

Le départ est toujours en P(10, 10, 0), la vitesse initiale est nulle, et chaque passage par l'algorithme produit un déplacement δ=1.

Le but est en $P_B$(325, 225, 0), le coefficient d'influence k est fixé constant égal à 2.5 (sauf mention contraire), et la distance $d_I$ vaut 100.

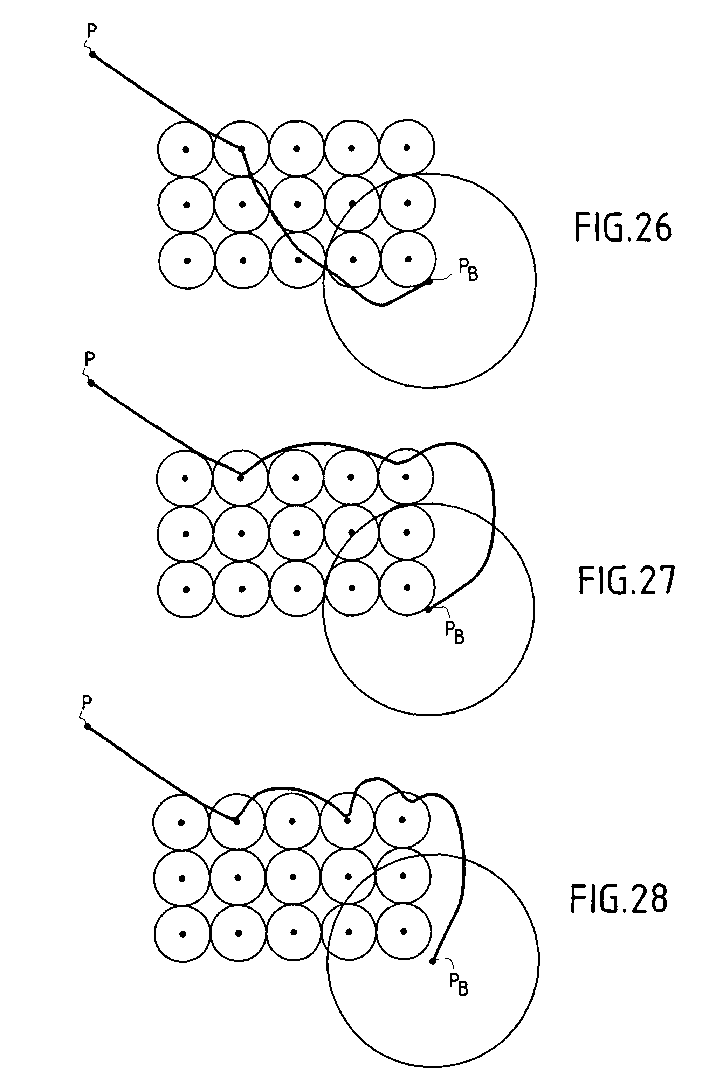

<u>Vingt-troisième exemple (figure 26)</u> :

$k_I$ = 1.0, et le coefficient d'influence de chaque obstacle vaut k'=20000.

La forte inertie de l'animate l'empêche d'être trop dévié par les centres de répulsion, d'autant plus que la valeur de k' n'est pas excessivement « importante »

Dans les exemples 24 à 31 tous les paramètres sont inchangés, sauf $k_I$.

<u>Vingt-quatrième exemple (figure 27)</u> :

$k_I$ = 0.99, cette petite différence de $k_I$ donne une toute autre trajectoire. L'animate est dévié à gauche, et non à droite comme précédemment. L'inertie, toujours importante, a un effet assez visible dans l'arrondi de fin de trajectoire.

<u>Vingt-cinquième exemple (figure 28)</u> :

$k_I$ = 0.98, et on peut sans doute voir que les déviations locales sont plus « affirmées » ; en fait elles sont moins lissées.

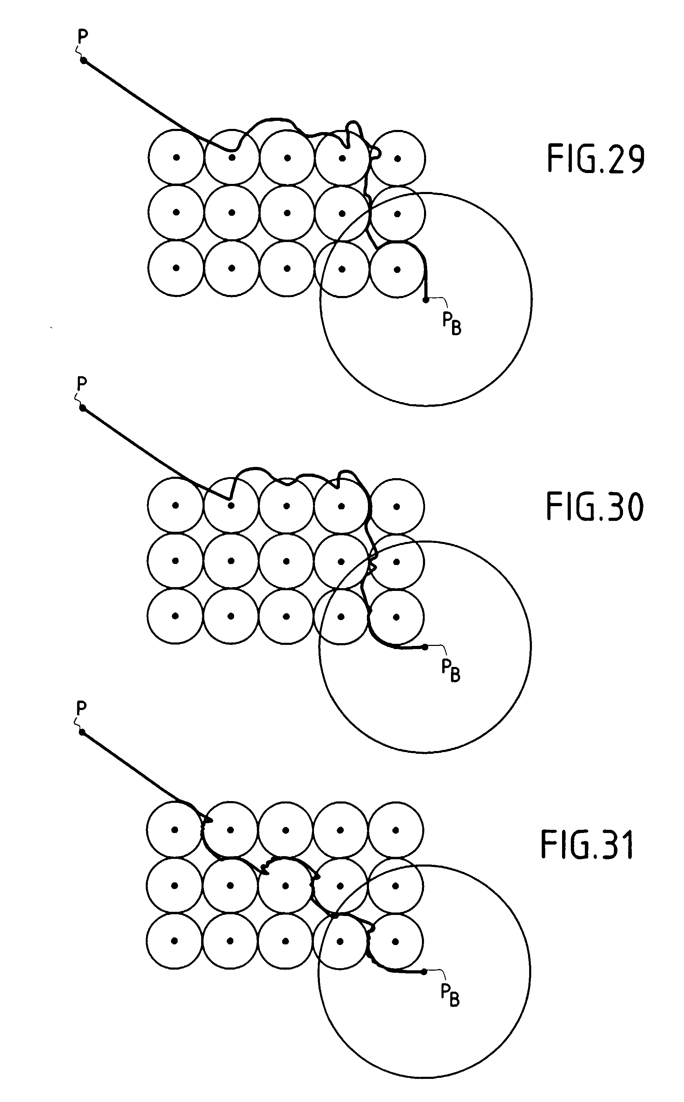

<u>Vingt-sixième exemple (figure 29)</u> :

$k_I$ = 0.97, et la perte d'inertie se fait de plus en plus sentir. Les évitements locaux sont peu lissés, et le sont de moins en moins au fur et à mesure que l'animate s'approche du but. Il ne faut pas non plus oublier que, dans la zone près du but, l'inertie décroît selon une loi parabolique.

<u>Vingt-septième exemple (figure 30)</u> :

$k_I$ =0.96, et le mouvement devient presque erratique, en particulier au voisinage du but. Tout près du but se produisent d'ailleurs des oscillations peu réalistes qui indiquent que l'animate trouve difficilement son chemin.

Cet effet néfaste se fait encore plus sentir sur les figures 31 à 34 où $k_I$ décroît.

<u>Vingt-huitième exemple (figure 31)</u>

$k_I$ =0.90, le comportement de l'objet est de plus en plus erratique.

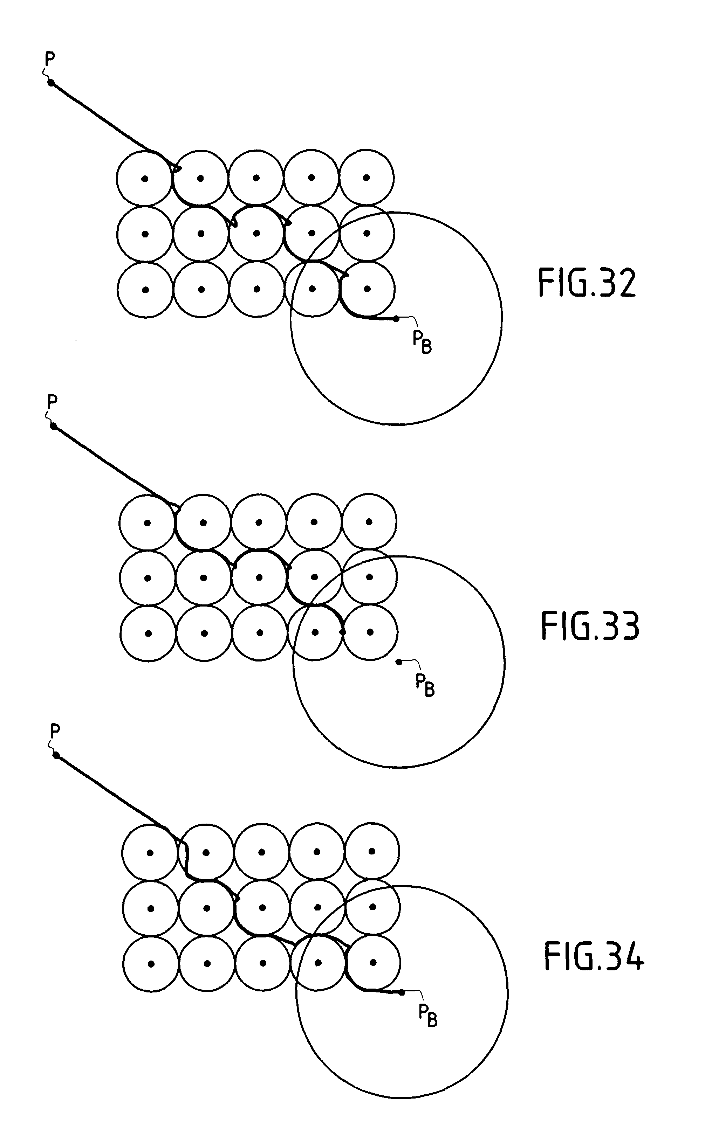

<u>Vingt-neuvième exemple (figure 32)</u> :

$k_I$ = 0.80. La trajectoire épouse de plus en plus le bord des obstacles du fait de la « faible» inertie. En fait l'animate oscille autour des bords, en effectuant de brusques changements de direction.

<u>Trentième exemple (figure 33)</u> :

$k_I$=0.50 . L'animate s'est perdu dans un minimum local et n'a pu en sortir du fait de son inertie réduite.

Une solution pour sortir de ce minimum local est donnée par l'exemple suivant.

<u>Trente et unième exemple (figure 34)</u>

$k_I$ = 0.50 (comme dans l'exemple précédent). Mais on double l'influence du but en prenant k=5.0 (au lieu de 2.5). Cela permet de « tirer » l'animate hors du minimum local. Il faut noter qu'il est équivalent de doubler la valeur de k (coefficient d'influence du but) et de diviser par 2 la valeur de k' (coefficient d'influence des obstacles).

Une valeur de k assez faible (=0.5) produit donc plutôt une trajectoire « désordonnée » ainsi qu'un risque de plongeon dans un puits de potentiel. Les exemples suivants décrivent ce qui se passe, si on diminue la valeur de k' (coefficient d'influence des obstacles). Pour la suite on prend donc k'=5000.

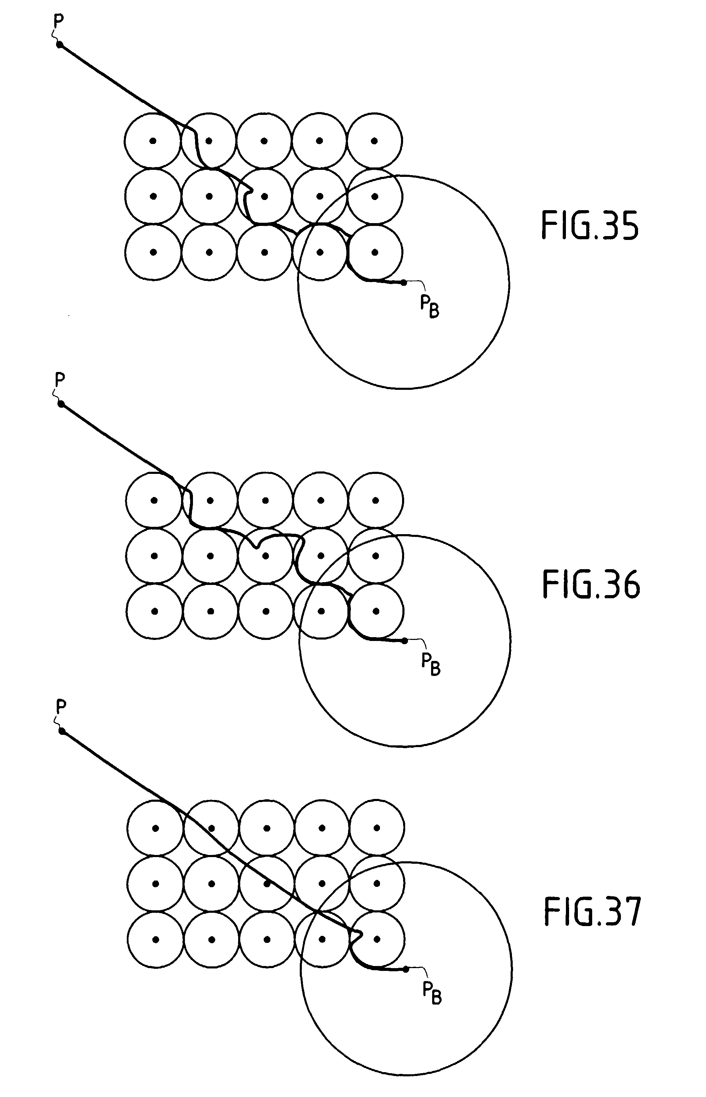

<u>Trente-deuxième exemple (figure 35)</u> :

$k_I$ = 0.50 (la même valeur que précédemment), mais les obstacles ont moins d'influence à cause de la valeur k'=5000.

La trajectoire a en fait un caractère moins oscillatoire, sauf tout près du but.

<u>Trente-troisième exemple (figure 36)</u> :

On augmente de nouveau $k_l$ : $k_l$ = 0.80 (et k'=5000).

L'animate s'insinue plus dans sa trajectoire.

<u>Trente-quatrième exemple (figure 37)</u> :

On augmente encore $k_l$ ($k_l$ = 1), tout en conservant un coefficient d'influence k' des obstacles assez faible (k'=5000).

La forte inertie et la faible influence des obstacles produit de très faibles déviations, sauf près du but où l'inertie est paraboliquement décroissante.

Les points déplacés dans les exemples ci-dessus, ainsi que les buts et les obstacles, peuvent correspondre à des points d'une image représentée sur un écran, et qui est animée.

Le principe de transformation décrit ci-dessus peut être appliqué à tout type de représentation et d'animation d'une forme. Des points décrivent la forme en question, celle-ci (ou ceux-ci) étant par exemple obtenue(us) par CAO ou par tout autre type de modélisation: il peut également s'agir d'une image digitalisée d'un objet réel, l'image étant alors équivalente à la donnée de l'ensemble de ses pixels avec les intensités correspondantes.

A cette fin, en générant la forme en question, ou après l'avoir générée, on affecte, à tout ou partie des points qui la constituent, une composante de potentiel, dont pourra être déduite la valeur du champ d'image au point considéré, ainsi que les valeurs des paramètres $k_a$ , $k_i$, $k_l$ et $k_e$. Tous ces paramètres, avec les paramètres classiques (coordonnées cartésiennes par exemple) de repérage des points dans l'espace physique choisi (2D ou 3D) permettent une description de la forme de manière dynamique, c'est à dire en incorporant des paramètres dynamiques. Les quatre paramètres $k_a$ , $k_i$, $k_l$ et $k_e$ peuvent être réduits à deux paramètres réglables (coefficients d'amortissement et d'inertie) en prenant $k_l = k_e = 1$.

Le champ d'image en un point considéré, peut résulter, comme expliqué en détail ci-dessus, de l'influence d'un point but, avec ou sans point(s) obstacles(s), sur les points de la forme.

C'est le cas par exemple, des points d'une première forme influencés par une deuxième forme, extérieure à la première, l'influence se traduisant par une attraction ou une répulsion de la première forme par la deuxième. Un certain nombre de points de la deuxième forme peuvent en définir un champ en chaque point de la première forme, ceux-ci évoluant alors selon le procédé exposé ci-dessus. Ce cas a été illustré ci-dessus dans la quatrième série d'exemples, où la deuxième forme consiste en un bloc d'obstacles à éviter.

Mais, le champ d'image peut, selon un autre aspect de l'invention, être fonction du déplacement de la forme elle-même, sans qu'il soit même question de but et/ou d'obstacle dans l'image. En particulier, on peut définir le champ image en chaque point en fonction du déplacement d'au moins un des autres points de la forme, par exemple en fonction du déplacement des points qui sont les plus proches voisins de chaque point. Dans ce cas, le champ constitue donc un réseau d'influences mutuelles des points de la forme.

Là encore, le mouvement de chaque point de la forme est déterminé par le champ résultant en ce point, et ce champ peut avoir des composantes attractives et/ou des composantes répulsives. Par exemple, le maintien à distance de points de l'objet se traduit par une composante supplémentaire de champ répulsif.

Comme dans le cas déjà exposé, ci-dessus, chaque point de la forme peut être déplacé avec une vitesse proportionnelle au champ image en ce point.

Mathématiquement le vecteur vitesse v est, dans ce cas, donné par la formule

$$v=(\delta/\|E\|)E,$$

le coefficient $(\delta/\|E\|)$ étant destiné à produire un déplacement élémentaire égal à $\delta$.

L'algorithme de calcul de $P_{n+1}$ en fonction de $P_n$ est donc dans ce cas le suivant ($P_n$ désigne la position actuelle et $P_{n+1}$ la position suivante):

$$P_{n+l} = P_n + (\delta/\|En\|)E_n$$

où $E_n$ est le champ total en $P_n$

Selon une variante, permettant de prendre en compte l'effet d'inertie, chaque point est déplacé, d'un instant n à un instant n+1 selon les équations suivantes :

1)

$$V_{n+l} = k_a \cdot v_n + E_n$$

2)

$$P_{n+1} = P_n + (\delta/\|V_{n+1}\|) \cdot v_{n+l}$$

Le coefficient $k_a$ est le coefficient d'élasticité, ou d'amortissement. Si $k_a$ est très faible, le champ est pratiquement proportionnel à la vitesse, et si $k_a$ est voisin de 1 le champ est pratiquement proportionnel à l'accélération. Si $k_a$ = 0, on est ramené au cas où l'effet de l'inertie est annihilé.

Selon encore une variante, on introduit un coefficient supplémentaire (noté $k_l$ et par exemple compris entre 0 et 1), indépendant du but et tel que la vitesse de l'animate soit calculée selon la nouvelle formule (14) :

$$v_{n+1} = k_l \cdot k_a v_n + E_n. \tag{14}$$

Là encore, ceci permet une plus grande souplesse dans le réglage de l'inertie de l'animate.

Un algorithme de déplacement peut être alors donné par les règles suivantes,

A l'instant n (respectivement n+1), le point est dans l'état $\psi_n$ (respectivement $\psi_{n+1}$). Cet état est par exemple constitué par un ensemble de données cinématiques, à savoir la position $P_n$ et la vitesse $v_n$ du point objet. $\psi_{n+1}$ est obtenu par :

1) Calcul du champ total $E_n$ au point $P_n$
2) Calcul de la nouvelle vitesse

$$V_{n+1} = k_a v_n + k_i E_n \tag{15}$$

3) Calcul de la nouvelle position

$$P_{n+1} = P_n + V_{n+1} \tag{16}$$

L'influence de $k_a$ ou de la notion de souplesse apparaît par exemple si $P_n$ décrit la position de l'extrémité d'une lame flexible dont l'autre extrémité est fixe. Si $k_a$ est faible, une impulsion appliquée sur l'extrémité libre va produire un mouvement très rapidement amorti : la lame n'est pas souple (dure). Si $k_a$ est plus grand, le mouvement est oscillatoire et amorti plus lentement : la lame est souple.

On peut aussi, selon une formule plus générale, calculer la vitesse du point selon :

$$V_{n+1} = k_a V_n + k_i E_n \tag{14'}$$

ou encore :

$$V_{n+1} = k_l k_a V_n + k_i E_n \tag{14''},$$

où les différents coefficients ont la signification déjà donnée.

En particulier, $k_a$ peut dépendre de la distance, par exemple selon la formule (11) ci-dessus.

Le cas où le champ d'image est fonction du déplacement sera illustré plus loin avec un exemple d'application à un modèle de membrane souple.

Il est possible de combiner ce cas avec celui de l'influence de points but(s) et/ou obstacle(s) extérieurs. Pour cela le champ E est défini de manière appropriée et intègre toutes les composantes. Au mouvement "interne" peut donc se rajouter un mouvement "externe", dont la description est faite par exemple en termes de but et d'obstacles, comme décrit ci-dessus. En tout point, le champ résultant sera par exemple la somme de tout les champs (principe d'additivité des champs).

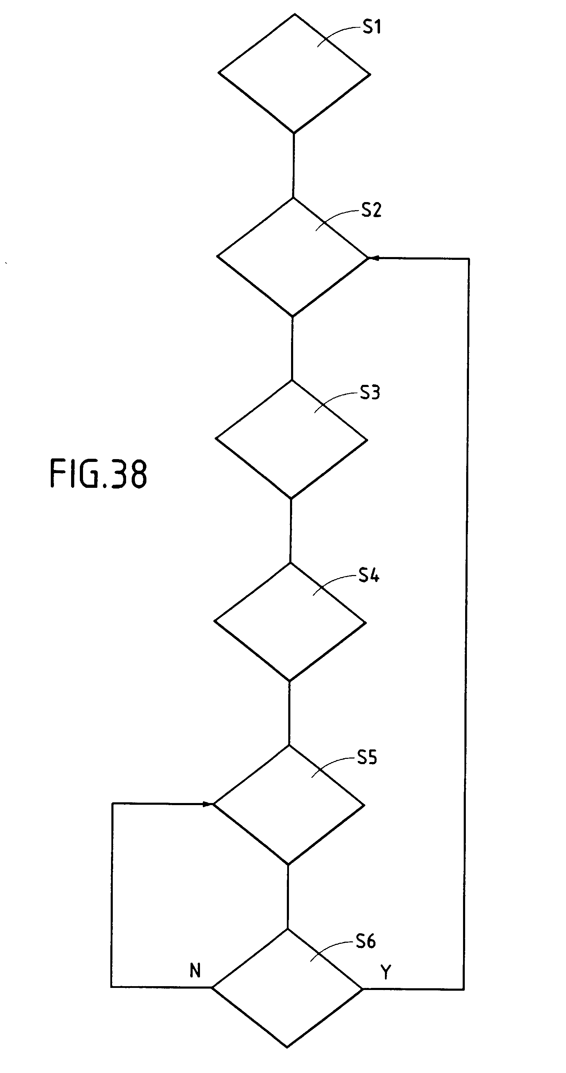

Des étapes d'un procédé selon l'invention sont représentées schématiquement sur la figure 38.

Une première étape (S1) concerne la définition de l'objet ou de la forme, décrit(e) par exemple avec des points repérés dans un espace. Cet objet, ou forme, peut être affiché sur un dispositif de visualisation.

Au cours d'une deuxième étape (S2), un potentiel, ou un champ, est défini pour toute ou partie de la forme. Une composante de potentiel, ou de champ, est affectée à ces points .

Puis à l'étape (S3), on affecte aux points les valeurs des paramètres $k_a$, $k_i$, et éventuellement $k_l$ et $k_e$.

Le calcul ou la détermination du mouvement de la vitesse ou du déplacement est ensuite effectué (étape S4).

Ce mouvement, ou ce déplacement, peut être visualisé (étape S5).

Eventuellement, les paramètres de champ et/ou les paramètres dynamiques peuvent être modifiés (étape S6) auquel cas (y) la vitesse et/ou le déplacement (S4) sont recalculés. Sinon (N), la visualisation continue.

Ces étapes peuvent être modifiées selon les besoins. De plus, l'étape S4 de calcul de déplacement ou de mouvement a été détaillée ci-dessus à l'aide de divers algorithmes.

Le procédé exposé ci-dessus peut être appliqué à toute forme de surfaces paramétriques décrivant un objet de manière graphique.

Il peut, en particulier, être appliqué à des objets graphiques tridimensionnels engendrés ou modélisés à l'aide de fonctions splines.

Cette technologie, combinée au procédé selon l'invention tel qu'expliqué ci-dessus, permet de créer des objets 3D, mais aussi de les transformer et de les animer, le tout en temps réel.

Plus précisément, la géométrie d'un objet est de préférence décrite à l'aide de surfaces NURBS.

Grâce aux NURBS, la géométrie d'un modèle 3D n'est plus définie par des polygones, très lourds à gérer, mais, par des courbes mathématiques, générées à partir de faibles quantités d'informations qui constituent les véritables données de l'objet.

Ces données définissent une description de l'objet beaucoup plus globale que les trois coordonnées spatiales de la technique polygonale. Il s'agit d'informations contenant non seulement une description de la géométrie de l'objet (pouvant donner une résolution beaucoup plus grande qu'avec la technique des polygones) mais aussi une description des formes générales codées ou encodées.

Les courbes et les surfaces NURBS (abréviation de "Non-Uniform Rational B-spline") furent conçues spécialement pour la modélisation 3D sur ordinateur.

A la base, il s'agit de surfaces générées à partir d'algorithmes de calcul ; elles ont des propriétés spécifiques indiquées par leur nom générique (N.U.R.B.S.):

- Les "B-Splines" sont définies comme étant une succession de courbes de Bézier.
- "Rationnelle" signifie que l'équation utilisée pour représenter la courbe ou la surface est exprimée sous forme d'un rapport entre deux polynômes. Une telle équation rationnelle permet une meilleure modélisation de certaines courbes et surfaces importantes, notamment les sections coniques, les sphères, etc...
- "Non-Uniforme" signifie que la portée d'un sommet de contrôle de la surface est variable. Les courbes et les surfaces uniformes (ce qui n'est donc pas le cas des NURBS) ne sont pas invariables dans une projection de perspective, ce qui est une restriction importante pour la modélisation 3D interactive.

Les surfaces NURBS peuvent être considérées comme étant le résultat d'une interpolation entre des sections, elles-mêmes formées par interpolation à partir de simples "points de contrôle".

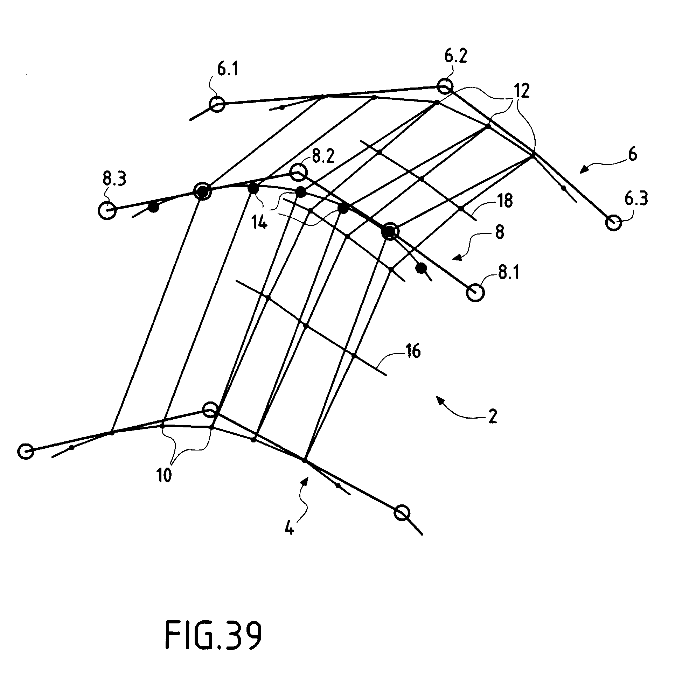

Un modèle 3D utilisant les "B-Spline" peut être défini par les éléments suivants, représentés schématiquement en Figure 39 :

- Des objets tridimensionnels 2, appelés "os" ou "bones", organisés selon une certaine hiérarchie.
- Chaque os est une suite de sections. Un os est constitué d'au moins 3 sections :

    - deux sections nodales 4, 6 à chaque extrémité
    - au moins une section 8 de contrôle intermédiaire (s). En général, il faut plusieurs sections de contrôle intermédiaires afin de définir précisément un "bone".

Ainsi, par exemple, une tête humaine sera définie par huit sections de contrôle afin d'avoir un rendu suffisamment précis.

- Chaque section est composée d'un certain nombre de points de contrôle 6-1, 6-2, 6-3, 8-1, 8-2, 8-3.

Par exemple, pour une tête humaine, on peut prendre 12 points de contrôle par section, afin d'avoir une description précise de la géométrie de l'objet. Ainsi, une tête humaine pourra avoir en moyenne (selon la précision voulue, qui sera dépendante de la grosseur de cette tête dans l'image) 100 points de contrôle.

Des polygones peuvent par la suite être générées à partir de la combinaison de sections et de points de contrôle. Ces polygones sont organisés en une suite de points alternés selon le modèle dit du "STRIP" pour en accélérer le rendu sur un écran graphique.

Les sections et les points de contrôle définissent le maillage de contrôle de l'objet.

Le processus d'interpolation, qui génère une surface, est le suivant :

1. Pour chaque section, les points appartenant à la surface sont calculés grâce à la théorie du "B-Spline" de second degré.

- Pour les sections nodales, ces points appartiennent réellement à la surface (ce sont les "Points Interpolés" (10, 12)).
- Pour les sections de contrôle, en revanche, ces points sont des points de contrôle (les Points de Contrôle Interpolés 14).

2. A partir de chaque Point Interpolé et Point de Contrôle Interpolé de chaque section, des sections intermédiaires (sections interpolées 16, 18) sont générées, dont chaque point appartient réellement à la surface.

Les "Bones", les Sections et les Points de contrôle sont les trois éléments qui définissent alors la complexité d'un modèle 3D.

Ils génèrent des polygones ; de leur nombre dépendra donc la taille des polygones générés.

Les points de contrôle et les sections peuvent être utilisés pour créer et transformer les objets 3D.

Le processus algorithmique et/ou mathématique de création d'une surface d'un objet 3D est le suivant :

1. Génération de "spline"

A partir de N points de contrôle, en génère kN points 3D par interpolation. (k étant un facteur dépendant du degré de précision voulu pour l'objet. Ce degré pourra être par exemple fonction de la distance de l'objet à la caméra, ou de la puissance de la station de travail PC).

Les objets sont générés mathématiquement, ils peuvent par conséquent avoir un espace paramètre en plus de l'espace géométrique 3D dans lequel ils sont affichés.

Ainsi, chaque point 3D peut être associé à un vecteur à huit dimensions, représenté par huit coordonnées :

- Les coordonnées spatiales : X, Y, Z
- Les coordonnées de texture : U,V
- Les coordonnées du vecteur tangentiel : $X_t$, $Y_t$, $Z_t$

En réalité, pour une "spline", seule une coordonnée de texture est interpolée (V) , et l'autre est gardée constante. Ainsi le vecteur à huit dimensions est organisé en deux vecteurs :

- L'un à quatre dimensions (coordonnées X, Y, Z, V)
- L'autre, tridimensionnel, de coordonnées ($X_t$, $Y_t$, $Z_t$)

Le processus d'interpolation est le même pour les quatre coordonnées du vecteur (X, Y, Z, V) ; il sera aussi identique pour les trois coordonnées de l'autre vecteur.

2. Génération de la surface

A partir de M sections de contrôle, on génère r(M-1) + 1 sections interpolées. "r" est un facteur dépendant du degré de précision de la description de l'objet, qui pourra être fonction par exemple de la distance de l'objet à la caméra.

Le nombre total de points 3D pour la surface est alors k.N [r.(M-1) + 1]

3. Calcul du vecteur normal

4. Calcul de la perspective

Chaque point 3D visible peut être projeté dans le repère à deux dimensions de la caméra.

5. Calcul des lumières

L'application du procédé d'animation selon l'invention à des objets décrits à l'aide d'une ou de plusieurs surfaces NURBS permet de décrire ces objets de manière très compacte : un objet, ainsi décrit, quelle que soit sa complexité (qu'elle soit de l'ordre de cent mille polygones, ou bien de deux mille) peut être stocké sous forme d'informations ne dépassant pas, par exemple, 5 Kilo-octets de données informatiques, soit sept cent fois moins qu'avec la technique classique des polygones (ces valeurs dépendent de la précision souhaitée). Ces données suffiront à définir entièrement un personnage, ou une forme tridimensionnelle, qui peut ensuite subir toutes sortes de transformations, le tout en temps réel.

Un exemple d'application peut être donné, qui concerne un modèle de membrane souple.

Soit une forme géométrique d'équilibre décrite comme une surface de Bézier. Cette surface est une suite de sections de contrôle ....$S_{k-1}$, $S_k$, $S_{k+1}$, ....... chacune des sections $S_k$ étant constituée des points de contrôle ........ $P_{[k(j-1)]0}$, $P_{[kj]0}$, $P_{[k(j+1)]0}$, où les indices 0 indiquent que ces points de contrôle sont d'équilibre.

Une variation du point de contrôle $P_{kj}$ autour de sa position d'équilibre $P_{[kj]0}$ s'écrit comme étant la différence $\delta P_{kj} = P_{kj} - P_{[kj]0}$. Si on souhaite un modèle de membrane pour lequel toute variation locale de sa forme se propage de proche en proche, tout en tendant à minimiser l'écart par rapport à sa position d'équilibre, on peut imposer à chaque point morphique $P_{Kj}$ d'être soumis au champ d'influence :

$$E_{kj} = \delta P_{k(j+1)} + \delta P_{k(j-1)} + \delta P_{(k+1)j} + \delta P_{(k-1)j} - 4.\, \delta P_{kj}$$

Cette équation peut s'interpréter comme la variation de courbure du point morphique $P_{kj}$.

$E_{kj}$ s'exprime en fonction du point $P_{kj}$ lui-même, ainsi que de ses quatre plus proches voisins. Dans cet exemple, le champ d'influence $E_{kj}$ est donc un champ d'influence mutuelle dont l'origine est le mouvement même des points morphiques adjacents. Ce mouvement s'interprète ici comme une déformation. On n'a décrit ici qu'une influence mutuelle, mais une influence extérieure est bien sûr envisageable, sous la forme par exemple d'un champ de gravité $E_G$, qui se rajouterait simplement au champ $E_{kj}$. Chaque point est donc intrinsèquement soumis à l'influence des champs créés par les déplacements des points voisins, produisant un effet global de souplesse ou de rigidité, d'amortissement lent ou rapide, selon les valeurs choisies pour les paramètres dynamiques $k_i$ et $k_e$ de chacun des points $P_{kj}$.

D'un point de vue algorithmique, on peut calculer les coordonnées spatiales de tous les points $P_{kj}$ ($P_{[kj]n}$ représente l'ensemble des coordonnées spatiales du point $P_{kj}$ à l'instant n) de la manière suivante. A l'instant n ces coordonnées s'expriment comme étant la somme de la position d'équilibre et de sa variation : $P_{[kj]n} = P_{[kj]0} + \delta P_{[kj]n}$ ; comme $P_{[kj]0}$ est une grandeur connue, il suffit de calculer $\delta P_{[kj]n}$. Soit $V_{[kj]n}$ la vitesse de la variation $\delta P_{[kj]n}$ ; il vient, en appliquant les équations (15) et (10) aux variations $\delta P_{kj}$ :

$$V_{[kj]n} = (k_a)_{kj} V_{[kj](n-1)} + (k_i)_{kj}\, I.E_{[kj]n}$$

La valeur du coefficient I (intensité du champ) peut être fixée à 0.1, par exemple.

Et:

$$E_{[kj]n} = [\delta P_{k(j+1)} + \delta P_{k(j-1)} + \delta P_{(k+1)j} + \delta P_{(k-1)j} - 4.\, \delta P_{kj}]n$$

$$\delta P_{[kj]n} = \delta P_{[kj](n-1)} + V_{[kj]n}$$

D'où : $P_{[kj]n} = P_{[kj]0} + \delta P_{[kj]n}$

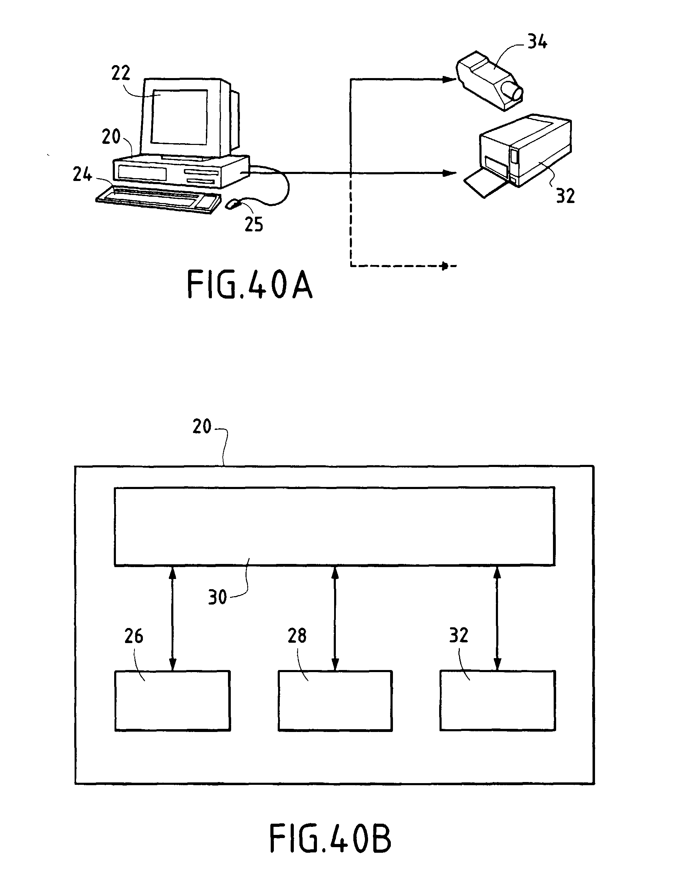

Le procédé de traitement ou d'animation d'images conforme à l'invention peut être mis en oeuvre à l'aide d'un dispositif tel que celui illustré sur les figures 40A et 40B.

La figure 40A représente globalement une station graphique comportant un micro-ordinateur 20 configuré de manière adaptée pour la génération et le traitement, selon un procédé conforme à l'invention, d'objets graphiques bidimensionnels ou tridimensionnels, un périphérique de sortie 22 et des périphériques de contrôle (clavier 24 et souris 25). Le micro-ordinateur 20 comporte une section de calcul avec toutes les composantes électroniques, logiciels ou autres, nécessaires à la génération d'images et au traitement ou à l'animation des images ainsi obtenues.

Plus précisément, le système utilise un micro-ordinateur de type PC et de puissance moyenne. Ce micro-ordinateur se compose d'une unité centrale 20 qui comporte un microprocesseur 26, une mémoire 28, un périphérique d'entrée, par exemple de type disque dur 32, couplés à un bus 30. Un périphérique de sortie, par exemple de type écran 22, ou dispositif de visualisation piloté par une carte vidéo permet d'afficher des informations. Le micro-ordinateur dispose également des périphériques de contrôle, en l'occurrence le clavier 24 et la souris 25. Le langage de programmation utilisé est le langage C++, ainsi que le langage d'assemblage des microprocesseurs Pentium.

Des modèles, notamment à base de splines, peuvent être enregistrés et lus à partir d'un disque dur.

Ces modèles générés sont visualisés sur l'écran 22 par l'intermédiaire du sous-système graphique. C'est-à-dire :

- Soit en utilisant un algorithme de tracé de ligne qui écrit les points directement dans la mémoire graphique de l'ordinateur, afin que ces derniers soient visualisés sur l'écran par la carte vidéo (partie hardware du sous-système graphique).
- Soit en utilisant des algorithmes de contrôle d'un logiciel de pilotage (API) d'une carte 3D (pouvant afficher des informations tridimensionnelles), c'est à dire d'une carte spécialisée dans l'affichage, non pas de points mais de polygones ; la carte 3D convertit elle même, par la suite, les polygones en points affichés pour la carte vidéo. On note ici que ce ne sont pas les splines qui sont "envoyés" à la carte 3D mais bien des polygones (triangles) générés pour l'affichage à partir de ces mêmes splines.

Pour manipuler les objets, on utilise les périphériques de contrôle, en particulier le clavier 24 ou la souris 25, pour, par exemple, sélectionner et déplacer les points morphiques dans l'espace 3D qui est représenté sur l'écran, les champs attractifs ou répulsifs du système, etc.. ou pour faire apparaître et disparaître un menu déroulant, c'est à dire une zone d'affichage constituée des paramètres des points morphiques. Ces derniers peuvent aussi être réglés par d'autres touches du clavier 24.

L'objet, à partir du logiciel (l'application), est chargé du disque dur dans la mémoire centrale de l'ordinateur et s'affiche sur l'écran. Le manipulateur utilise alors les commandes (périphériques de contrôle) pour effectuer les opérations voulues. Le programme comporte par exemple les possibilités suivantes :

- Initialiser l'application.
- Charger un modèle décrit selon le procédé.
- Afficher un modèle soit :

  - Déterminer, à partir des splines, des réglages initiaux de leurs paramètres et des algorithmes du procédé, les éléments tridimensionnels (polygone).
  - Transformer les éléments tridimensionnels en éléments bidimensionnels pouvant être par la suite affichés sur un écran.
  - Afficher les éléments bidimensionnels ainsi générés, soit en utilisant un algorithme de tracé de ligne, soit en utilisant une librairie de fonctions permettant d'utiliser des cartes hardware spécialisées dans ce domaine (cartes 3D).
  - Manipuler des objets (bones, sections, points morphiques, champs, textures, lumières) en modifiant leurs paramètres (coordonnées de textures, position, longueur, $k_i$, $k_a$, etc.).

- Quitter l'application.

Un programme, permettant de mettre en oeuvre le procédé selon l'invention est résidant ou enregistré sur un support (par exemple : disquette ou CD ROM ou disque dur amovible ou support magnétique) susceptible d'être lu par un système informatique ou par le micro-ordinateur 20. Ce programme comporte par exemple des instructions commandant au micro-ordinateur de :

- déterminer des points géométriques définissant une forme dans l'espace
- attribuer à de points géométriques de cette forme, un vecteur champ
- déterminer le mouvement de points selon une équation du mouvement, en
       fonction du champ en ce même point
- déplacer les points de la forme selon le mouvement ainsi déterminé.

L'affichage de la forme ou des points sur l'écran graphique 22 est fait en temps réel. Le procédé selon l'invention permet de visualiser le mouvement de l'objet en temps réel.

Ou bien le programme comporte des instructions commandant par exemple au micro-ordinateur de:

- déterminer des points géométriques définissant une forme dans l'espace
- déterminer le mouvement de points de cette forme en fonction du déplacement d'au moins un autre point de la forme

- déplacer les points de la forme selon le mouvement ainsi déterminé.

Là encore l'affichage de la forme ou des points sur l'écran graphique 22 est fait en temps réel. Le procédé selon l'invention permet de visualiser le mouvement de l'objet en temps réel.

Ou bien le programme comporte des instructions commandant par exemple au micro-ordinateur de déplacer un point objet d'une image à animer, comportant un point, dit point but (PB) de l'image, ladite image comportant en outre, éventuellement, des points obstacles, en:

- définissant une fonction de champ, dite champ d'image, comportant :

   • une composante attractive associée au point but et s'annulant en ce point
   • et, si des points obstacles sont présents, une composante répulsive associée à chacun des points obstacles

- déterminant le mouvement du point objet selon une équation du mouvement, en fonction du champ en ce même point
- déplaçant le point objet selon le mouvement ainsi déterminé.

Là encore l'affichage de la forme ou des points sur l'écran graphique 22 est fait en temps réel. Le procédé selon l'invention permet de visualiser le mouvement de l'objet en temps réel.

Le micro-ordinateur comporte des moyens de calcul des valeurs de potentiel ou de champ et/ou de $k_a$ et $k_i$ aux points considérés ou sélectionnés, ainsi que de la vitesse de déplacement et des nouvelles coordonnées des points.

Le micro-ordinateur 20 peut être programmé pour générer des surfaces NURBS comme décrit ci-dessus. Il peut être aussi programmé pour la génération ou la conception de formes assistée par ordinateur (CAO). Les données relatives à la forme, ou les points qui la définissent, en 2D ou 3D, sont stockées en mémoire, de même que les paramètres dynamiques correspondant.

Le micro-ordinateur 20 est également relié à d'autres dispositifs périphériques, tels que par exemple, des dispositifs d'impression (non représentés sur la figure). Il peut être relié à un réseau électronique de type Internet, permettant d'envoyer des données relatives aux formes générées. Selon l'invention ces données comportent d'une part des données sur les coordonnées relatives des points définissant l'objet, mais aussi des données relatives à la dynamique des points et de l'objet lui-même. Le micro-ordinateur 20 peut également être relié à une chaîne d'acquisition d'images, donc par exemple à une caméra numérique 34 qui permet d'acquérir des images numériques d'un objet. Ces images sont ensuite mémorisées dans la mémoire du micro-ordinateur et soumise à un traitement conforme à la présente invention.

Comme déjà mentionné dans l'introduction, les objets de l'invention peuvent être appliqués à la réalisation cinématographique ou aux jeux vidéo, mais aussi aux procédés de conception et de pièces techniques où il est important non seulement de représenter ces pièces, mais aussi de pouvoir observer leur comportement lors de déformations simulées.

**Revendications**

1. Procédé de génération d'une forme animée à des instants n, n+1, comportant les étapes suivantes :

   - déterminer des points géométriques définissant la forme dans l'espace
   - attribuer à chaque point géométrique, un vecteur champ
   - déterminer le mouvement de chaque point selon une équation du mouvement, en fonction du champ en ce même point
   - déplacer les points de la forme selon le mouvement ainsi déterminé.

2. Procédé selon la revendication 1, le champ en un point étant fonction du déplacement d'au moins un autre point de la forme.

3. Procédé selon la revendication 2, le champ en un point étant fonction du déplacement des points qui sont les plus proches voisins dudit point.

4. Procédé selon l'une des revendications 1 à 3, l'équation du mouvement donnant la valeur de la vitesse de chaque point à l'instant n+1 en fonction de la vitesse à l'instant n et du champ en ce même point.

**5.** Procédé selon l'une des revendications 1 à 4, l'équation du mouvement reliant la vitesse de chaque point proportionnellement au champ en ce point.

**6.** Procédé selon l'une des revendications 1 à 4, l'équation du mouvement donnant la vitesse de déplacement de chaque point selon la formule :

$$V_{n+1} = k_a \, V_n + k_i \, E_n$$

OÙ

* $V_{n+1}$ et $V_n$ représentent respectivement la vitesse aux instants n+1 et n
* En représente la valeur du champ au point considéré à l'instant n
* $k_a$ et $k_i$ sont des coefficients, dits respectivement d'amortissement et d'inertie.

**7.** Procédé de génération d'une forme animée à des instants n, n+1, comportant les étapes suivantes :

- déterminer des points géométriques définissant la forme dans l'espace
- déterminer le mouvement de chaque point en fonction du déplacement d'au moins un autre point de la forme
- déplacer les points de la forme selon le mouvement ainsi déterminé.

**8.** Procédé selon la revendication 7, le déplacement de chaque point étant déterminé en fonction du déplacement des points qui sont les plus proches voisins dudit point.

**9.** Procédé de déplacement d'un point objet d'une image à animer, comportant un point, dit point but (PB) de l'image, ladite image comportant en outre, éventuellement, des points obstacles, ce procédé comportant les étapes suivantes :

- la définition d'une fonction de champ, dite champ d'image, comportant :

  • une composante attractive associée au point but et s'annulant en ce point
  • et, si des points obstacles sont présents, une composante répulsive associée à chacun des points obstacles

- la détermination du mouvement du point objet selon une équation du mouvement, en fonction du champ en ce même point
- le déplacement du point objet selon le mouvement ainsi déterminé.

**10.** Procédé selon la revendication 9, comportant en outre le calcul de la vitesse de déplacement du point objet, proportionnellement à la valeur du champ d'image en ce point objet, le point objet étant déplacé en fonction de la vitesse de déplacement calculée.

**11.** Procédé selon la revendication 9, comportant en outre le calcul de la vitesse de déplacement du point objet, selon la formule

$$V_{n+1} = k_a. \, V_n + k_i \, E_n,$$

où :

* $V_{n+1}$ et $V_n$ représentent respectivement la vitesse aux instants n+1 et n,
* $E_n$ représente la valeur du champ au lieu de positionnement du point à l'instant n,
* $k_a$ et $k_i$ sont des coefficients dits, respectivement, d'amortissement et d'inertie,

le point objet étant déplacé selon la vitesse de déplacement calculée.

**12.** Procédé selon la revendication 11, $k_a$ étant fonction de la distance d au but, et est tel que le point objet se déplace avec une inertie décroissante lorsqu'il se rapproche du point but.

**13.** Procédé selon la revendication 11, le coefficient $k_a$ tendant vers 0 lorsque la distance d au but tend vers 0.

**14.** Procédé selon la revendication 11 à 13, le coefficient $k_a$ étant une fonction parabolique décroissante de d, s'annulant pour d=0.

**15.** Procédé selon l'une des revendications 11 à 14, le coefficient $k_a$ étant constant pour d supérieur à une distance caractéristique $d_l$.

**16.** Procédé selon l'une des revendications 11 à 14, le coefficient $k_a$ ayant la forme suivante:

$$k_a = (\|d_n\|/d_l).[2- (\|d_n\|/d_l)]$$

**17.** Procédé selon l'une des revendications 9 à 16, la composante attractive du champ ayant un potentiel qui s'annule au point objet.

**18.** Procédé selon l'une des revendications 9 à 17, la composante répulsive du champ ayant un potentiel qui est une fonction au plus décroissante de la distance du point objet au point obstacle concerné.

**19.** Procédé selon la revendication 18, le potentiel associé à la composante répulsive du champ pour un point obstacle $P_O$ donné ayant une valeur constante au delà d'une certaine distance $d_i$ à l'obstacle lui-même.

**20.** Procédé selon la revendication 19, le potentiel ayant la forme suivante, où d désigne la distance entre un point P courant et le point obstacle $P_O$ :

$$V(P) = k'/d, \text{ si } d < d_i$$

$$V(P) = k'/d_0, \text{ si } d \geq d_i$$

**21.** Procédé selon l'une des revendications 9 à 20, une composante du déplacement du point objet, suivant un axe d'un repère de l'espace, étant uniquement fonction du signe de la composante de vitesse de déplacement calculée selon cet axe.

**22.** Procédé selon la revendication 10, la vitesse de déplacement étant calculée selon la formule :

$$V = (\delta/\|E\|).E$$

où V et E désignent respectivement les vecteurs vitesse et champ au point considéré, et où $\delta$ désigne le déplacement élémentaire du point objet.

**23.** Procédé selon la revendication 10 ou 22, la vitesse de déplacement étant calculée, dans le cas de N obstacles $(P_{oj}(j = 1,..., N)$, selon la formule :

$$(dx/dt) = N.\{-k.(x - x_B)+\textstyle\sum_{(j=1,N)} [k'_j. (x - x_{oj}) \|PP_{oj}\|^{-2} ]\}$$
$$(dy/dt) = N.\{-k.(y - y_B)+ \textstyle\sum_{(j=1,N)} [k'_j. (y - y_{oj}) \|PP_{oj}\|^{-2} ]\} \qquad (8)$$
$$(dz/dt) = N.\{-k.(z - z_B)+ \textstyle\sum_{(j=1,N)} [k'_j- (z - z_{oj}). \|PP_{oj}\|^{-2} ]\}$$

avec $N =(\delta/\|(E_B + \Sigma_{(j=1,N)} (E_{oj}))\|)$
où :

le coefficient k est caractéristique de la composante attractive associée au point but
chaque coefficient $k'_j$ est caractéristique de la composante répulsive associée à l'obstacle $P_{oj}$.

$E_{oj}$ désigne le champ associé à l'obstacle $P_{oj}$ et $E_B$ le champ attracteur associé au but B.

**24.** Procédé de déplacement d'un point objet d'une image à animer , comportant un ensemble de points but (PB) à atteindre, ladite image comportant en outre, éventuellement, des points obstacles, ce procédé comportant les étapes suivantes :

- sélection d 'un premier point but à atteindre
- déplacement du point objet selon le procédé selon l'une des revendications 9 à 23.

**25.** Procédé selon la revendication 24, le premier but à atteindre étant le but le plus proche du point objet.

**26.** Procédé selon l'une des revendications 1 à 8, la forme animée étant définie par au moins une surface NURBS, les points définissant la forme étant des points de contrôle de cette surface.

**27.** Procédé selon l'une des revendications 1 à 8, la forme étant obtenue par CAO ou étant une image digitalisée d'un objet réel.

**28.** Procédé selon l'une des revendications 9 à 25, l'image à animer étant celle d'une surface NURBS ou bien étant une image obtenue par CAO ou bien étant une image digitalisée.

**29.** Procédé selon l'une des revendications 9 à 25, l'image à animer étant celle d'une surface NURBS.

**30.** Dispositif pour générer une forme animée à des instants n, n+1, comportant les moyens suivants :

- des moyens pour déterminer des points géométriques définissant la forme dans l'espace
- des moyens pour attribuer à chaque point géométrique, un vecteur champ
- des moyens pour déterminer le mouvement de chaque point selon une équation du mouvement, en fonction du champ en ce même point
- des moyens pour déplacer les points de la forme selon le mouvement ainsi déterminé.

**31.** Dispositif pour générer une forme animée à des instants n, n+1, comportant :

- des moyens pour déterminer des points géométriques définissant la forme dans l'espace
- des moyens pour déterminer le mouvement de chaque point en fonction du déplacement d'au moins un autre point de la forme
- des moyens pour déplacer les points de la forme selon le mouvement ainsi déterminé.

**32.** Dispositif selon la revendication 31, le mouvement de chaque point étant déterminé en fonction du déplacement des points qui sont les plus proches voisins dudit point.

**33.** Dispositif pour déplacer un point objet d'une image à animer vers un point but (PB) de l'image, ladite image comportant en outre, éventuellement, des points obstacles, ce dispositif comportant :

- des moyens pour définir une fonction de champ, dite champ d'image, comportant :

  • une composante attractive associée au point but et s'annulant en ce point
  • et, si des points obstacles sont présents, une composante répulsive associée à chacun des points obstacles

- des moyens pour déterminer le mouvement du point objet selon une équation du mouvement, en fonction du champ en ce même point
- des moyens pour déplacer le point objet selon le mouvement ainsi déterminé.

**34.** Dispositif selon la revendication 33, les moyens pour déterminer le mouvement du point objet comportant des moyens pour calculer la vitesse de déplacement du point objet, proportionnellement à la valeur du champ d'image en ce point objet.

**35.** Dispositif selon la revendication 33, les moyens pour déterminer le mouvement du point objet comportant des moyens pour calculer la vitesse de déplacement du point objet, selon la formule

$$V_{n+1} = k_a . V_n + k_i E_n,$$

où :

* $V_{n+1}$ et $V_n$ représentent respectivement la vitesse aux instants n+1 et n, * $E_n$ représente la valeur du champ au lieu de positionnement du point à l'instant n,
* $k_a$ et $k_i$ sont des coefficients, dits respectivement d'amortissement et d'inertie.

36. Dispositif selon l'une des revendications 34 ou 35, les moyens pour déplacer le point objet comportant des moyens pour déplacer le point objet en fonction de la vitesse de déplacement calculée.

37. Dispositif selon la revendication 36, comportant en outre des moyens pour modifier la valeur de $k_i$ et/ou de $k_a$.

38. Dispositif selon l'une des revendications 30 à 35, comportant en outre des moyens pour modifier des paramètres du mouvement des points.

39. Dispositif selon l'une des revendications 37 ou 38, les moyens pour modifier la valeur de $k_i$ et/ou de $k_a$ ou .des paramètres du mouvement permettant de les modifier en temps réel.

FIG.1

FIG.2

FIG.3

FIG.4

P

$P_0$

$P_B$

FIG.5

P

$P_0$

$P_B$

FIG.6

P

$P_0$

$P_B$

FIG.7

FIG.8

FIG.9

FIG.10

FIG.11

FIG.12

FIG.13

FIG.14

FIG.15

FIG.16

FIG.17

FIG.18

FIG.19

FIG.20

P

P$_0$

P$_{0'}$

P$_B$

FIG.21

P

P$_0$

P$_{0'}$

P$_B$

FIG.22

P

P$_0$

P$_{0'}$

P$_B$

FIG.23

FIG.24

FIG.25

FIG.26

FIG.27

FIG.28

FIG.29

FIG.30

FIG.31

FIG.32

FIG.33

FIG.34

FIG.35

FIG.36

FIG.37

FIG.38

FIG.39

FIG.40A

FIG.40B

**Office européen des brevets**

## RAPPORT DE RECHERCHE EUROPEENNE

Numéro de la demande

EP 99 40 0341

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | MATARIC E.A.: "MOVEMENT CONTROL METHODS FOR COMPLEX, DYNAMICALLY SIMULATED AGENTS: ADONIS DANCES THE MACARENA" PROCEEDINGS OF THE SECOND INTERNATIONAL CONFERENCE ON AUTONOMOUS AGENT, 9 - 13 mai 1998, pages 317-324, XP002104910 NEW YORK NY USA * page 319, colonne de droite, ligne 32 - page 320, colonne de gauche, ligne 37 * --- | 1-25, 30-39 | G06T15/70 |
| A | WO 97 40471 A (KATRIX INC) 30 octobre 1997 * page 5, ligne 37 - page 6, ligne 25 * * page 15, ligne 1 - ligne 17 * * page 27, ligne 4 - ligne 9; figure 8 * --- | 1,7,9, 24,30 | |
| A | EP 0 827 115 A (MICROSOFT CORP) 4 mars 1998 * colonne 1, ligne 23 - ligne 34 * --- | 1,7,9, 24,30 | |
| A | BOULIC R ET AL: "COMPLEX CHARACTER POSITIONING BASED ON A COMPATIBLE FLOW MODEL OF MULTIPLE SUPPORTS" IEEE TRANSACTIONS ON VISUALIZATION AND COMPUTER GRAPHICS, vol. 3, no. 3, 1 juillet 1997, pages 245-261, XP000702052 * le document en entier * --- | 1,7,9, 24,30 | **DOMAINES TECHNIQUES RECHERCHES (Int.Cl.6)** G06T |
| A | EP 0 520 099 A (SHUKYOHOJIN KONGO ZEN SOHONZAN) 30 décembre 1992 * colonne 3, ligne 51 - colonne 5, ligne 30 * ----- | 1,7,30 | |

Le présent rapport a été établi pour toutes les revendications

| Lieu de la recherche | Date d'achèvement de la recherche | Examinateur |
|---|---|---|
| BERLIN | 4 juin 1999 | Burgaud, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**   EP 99 40 0341

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-06-1999

| Document brevet cité au rapport de recherche | | Date de publication | Membre(s) de la famille de brevet(s) | | Date de publication |
|---|---|---|---|---|---|
| WO 9740471 | A | 30-10-1997 | AUCUN | | |
| EP 0827115 | A | 04-03-1998 | US | 5889532 A | 30-03-1999 |
| | | | AU | 3245097 A | 12-02-1998 |
| | | | CA | 2211858 A | 02-02-1998 |
| | | | JP | 10261108 A | 29-09-1998 |
| EP 0520099 | A | 30-12-1992 | JP | 4270372 A | 25-09-1992 |
| | | | JP | 7313648 A | 05-12-1995 |
| | | | JP | 4270470 A | 25-09-1992 |
| | | | JP | 4271734 A | 28-09-1992 |
| | | | JP | 5084679 A | 06-04-1993 |
| | | | JP | 5204430 A | 13-08-1993 |
| | | | CA | 2043885 A | 26-06-1992 |
| | | | US | 5625577 A | 29-04-1997 |
| | | | CA | 2043884 A | 26-06-1992 |
| | | | CA | 2043902 A | 26-06-1992 |
| | | | US | 5623428 A | 22-04-1997 |
| | | | CA | 2043886 A | 26-06-1992 |
| | | | CA | 2043887 A | 26-06-1992 |
| | | | US | 5586224 A | 17-12-1996 |
| | | | CA | 2043888 A | 26-06-1992 |

EPO FORM P0460

Pour tout renseignement concernant cette annexe : voir Journal Officiel de l'Office européen des brevets, No.12/82